(19) Europäisches Patentamt
European Patent Office
Office européen des brevets

(11) **EP 3 987 928 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **21401039.9**

(22) Anmeldetag: **11.10.2021**

(51) Internationale Patentklassifikation (IPC):
***A01M 7/00*** *(2006.01)*

(52) Gemeinsame Patentklassifikation (CPC):
**A01M 7/0057**

(54) **LANDWIRTSCHAFTLICHES GERÄT MIT EINEM GESTÄNGE**

AGRICULTURAL DEVICE WITH A BOOM

APPAREIL AGRICOLE DOTÉ D'UNE RAMPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2020   DE 102020127684**

(43) Veröffentlichungstag der Anmeldung:
**27.04.2022   Patentblatt 2022/17**

(73) Patentinhaber: **Amazonen-Werke H. Dreyer SE & Co. KG**
**49205 Hasbergen (DE)**

(72) Erfinder: **GROSSE PRUES, Frank**
**49593 Bersenbrück (DE)**

(56) Entgegenhaltungen:
**DE-A1-102007 045 846     DE-A1-102016 109 513**
**DE-U1-202014 011 022**

**Beschreibung**

Die Erfindung betrifft ein landwirtschaftliches Gerät gemäß dem Oberbegriff des Patentanspruches 1 und ein Verfahren zum Betreiben eines landwirtschaftlichen Geräts gemäß dem Oberbegriff des Patentanspruches 8.

Innerhalb der Landwirtschaft sind eine Vielzahl von gezogenen, auf- bzw. angebauten und/oder selbstfahrenden Geräten bekannt. Die landwirtschaftlichen Geräte sind dabei je nach Art der Bearbeitung und/oder Behandlung einer landwirtschaftlichen Nutzfläche als Verteilmaschinen zum Ausbringen von Material und/oder als Bodenbearbeitungsmaschinen ausgeführt. Zu den Verteilmaschinen zählen hierbei beispielsweise Feldspritzen zum Ausbringen von flüssigem Material, insbesondere Spritzmittel, oder Sä- und/oder Düngermaschinen zum Ausbringen von festem, insbesondere granularem, Material, wie beispielsweise Saatgut und/oder Dünger. Als Bodenbearbeitungsmaschine ausgeführte landwirtschaftliche Geräte umfassen dabei zumindest teilweise in den Ackerboden der Nutzfläche eingreifende Werkzeuge die insbesondere dazu eingerichtet sind, den Ackerboden zumindest teilweise zu öffnen, zu schließen, aufzulockern und/oder zu verdichten. Ferner sind auch landwirtschaftliche Geräte bekannt, die eine kombinierte Ausführung aus einer Verteilmaschine und/oder einer Bodenbearbeitungsmaschine darstellen.

Um mittels derartiger landwirtschaftlicher Geräte eine großflächige und/oder effiziente Bearbeitung und/oder Behandlung der landwirtschaftlichen Nutzfläche zu erreichen, weisen diese für gewöhnlich ein, insbesondere ein- bzw. ausklappbares und daran angeordnetes, Gestänge auf. Das Gestänge kann sich dabei während einer Arbeitsstellung bzw. einem ausgeklappten Zustand auf bis zu 50 m oder mehr, quer zu einer Fahrtrichtung des landwirtschaftlichen Geräts, erstrecken und mehrere daran angeordnete und zur Bearbeitung und/oder Behandlung der landwirtschaftlichen Nutzfläche geeignete Stellelemente und/oder Werkzeuge aufweisen. Eine Einsatzhöhe des Gestänges, insbesondere der daran angeordneten Stellelemente und/oder Werkzeuge, soll dabei während des Betriebs in Bezug auf die landwirtschaftliche Nutzfläche, insbesondere ein Bodenprofil des Ackerbodens und/oder den darauf befindlichen Pflanzenbestand, möglichst konstant bleiben. Das Gestänge soll dabei auch während einer Überfahrt von Unebenheiten möglichst konstant zum Bodenprofil und/oder Pflanzenbestand gehalten werden.

Um das Gestänge von den Bewegungen und/oder Schwankungen des landwirtschaftlichen Geräts zumindest teilweise zu entkoppeln, werden gattungsgemäße Gestänge schwenkbar um zumindest eine, insbesondere horizontale und/oder zur Fahrtrichtung korrespondierende, Drehachse gelagert. Beispielhaft wird hierbei auf die aus den Dokumenten WO 2015/040133 A1 und WO 2017/202581 A1 bekannten landwirtschaftlichen Geräte verwiesen. Diese offenbaren landwirtschaftliche Geräte, insbesondere als Feldspritzen ausgebildete Verteilmaschinen, die ferner zumindest eine erste Sensoranordnung umfassen, mittels derer eine Neigung, Lage und/oder ein Abstand des Gestänges in Bezug auf zumindest eine Referenzebene und/oder die landwirtschaftliche Nutzfläche, insbesondere das Bodenprofil und/oder den Pflanzenbestand, erfassbar ist. Die zumindest eine erste Sensoranordnung ist dabei dazu eingerichtet, zumindest ein Sensorsignal in Abhängigkeit der erfassten Neigung, Lage und/oder des Abstands zu erzeugen. Ein Steuer- und/oder Regelsystem, welches dem landwirtschaftlichen Gerät und/oder dem Gestänge zugeordnet ist, ist mit der zumindest einen ersten Sensoranordnung signalübertragend verbunden und dazu eingerichtet, eine auf die zumindest eine Referenzebene und/oder die landwirtschaftliche Nutzfläche bezogene aktuelle Einsatzhöhe zumindest eines Abschnitts des Gestänges in Abhängigkeit des Sensorsignals zu ermitteln. Die Einsatzhöhe ist dabei von zumindest einem mit dem Gestänge gekoppelten Stellglied, welches vom Steuer- und/oder Regelsystem steuer- und/oder regelbar ist, beeinflussbar.

Problematisch hierbei ist, dass derartige Gestänge zur möglichst großen Anpassungsfähigkeit der Einsatzhöhe einen besonders großen Schwenkbereich um die zumindest eine Drehachse aufweisen. Insbesondere durch die Kombination des großen Schwenkbereiches mit den typischerweise besonders großen Längen derartiger Gestänge, können während des Betriebs zumindest Teile des Gestänges, insbesondere die äußersten Punkte des Gestänges, derartig stark ausschwenken, dass diese mit, insbesondere lokalen, Störkonturen in Kontakt kommen und somit beschädigt werden und/oder die Störkontur beschädigen. Als Störkontur sind hierbei jegliche Formen von Hindernissen für das Gestänge, wie Beispielsweise Baumstämme, Baumkronen, Überführungen, Zäune, Schilder, Masten und/oder mit einem Abstand zum Boden verlaufende Leitungen zu verstehen. Störkonturen stellen insbesondere Hindernisse dar, die mit den typischerweise verwendeten Sensoranordnungen landwirtschaftlicher Geräte besonders aufwendig oder nicht erfassbar sind und/oder eine zumindest teilweise fehlerhafte Erfassung der Neigung, Lage und/oder des Abstands verursachen können. Ferner kann somit unter der Störkontur auch der Wasserspiegel von Still- oder Fließgewässern, wie beispielsweise Seen oder Flüssen, verstanden werden, da insbesondere der Wasserspiegel Signale von emittierenden Sensoranordnungen, beispielsweise Ultraschallsensoren, negativ beeinflussen kann. Ferner sind hierbei auch andere Störkonturen denkbar, mit denen zumindest Teile des Gestänges, insbesondere bei fehlerhafter Steuerung und/oder Regelung der Neigung, Lage und/oder des Abstands, kollidieren können oder in die zumindest Teile des Gestänges eindringen können. Beispielsweise kann auch der Pflanzenbestand auf der landwirtschaftlichen Nutzfläche eine Störkontur für das Gestänge darstellen.

Die der Erfindung zugrunde liegende Aufgabe besteht somit darin, ein landwirtschaftliches Gerät mit einer verbesserten und/oder besonders betriebssicheren Steuerung und/oder Regelung des Gestänges, insbesondere der Einsatzhöhe, zu schaffen.

Diese Aufgabe wird erfindungsgemäß dadurch gelöst, dass vom Steuer- und/oder Regelsystem zumindest eine Grenzhöhe abrufbar und/oder vorgebbar ist, die durch einen Abstand zwischen wenigstens einem entlang der Referenzebene, insbesondere dem Bodenprofil und/oder Pflanzenbestand, befindlichen Fußpunkt und wenigstens einem in vertikaler Richtung dazu beabstandeten entlang einer Störkontur befindlichen Schnittpunkt gebildet ist, wobei die Einsatzhöhe des zumindest einen Abschnitts des Gestänges, insbesondere eines äußersten Punkts des Gestänges während einer aktuellen Arbeitsstellung, mittels des Steuer- und/oder Regelsystems und/oder des Stellglieds wenigstens in etwa auf die zumindest eine Grenzhöhe begrenzbar ist.

Das Gestänge kann hierbei aus mehreren einzelnen und/oder miteinander gekoppelten Gestängehälften und/oder Auslegern gebildet sein, die sich insbesondere jeweils lateral ausgehend vom landwirtschaftlichen Gerät über der landwirtschaftlichen Nutzfläche erstrecken. Ferner können jeweils eine Gestängehälfte und/oder ein Ausleger aus mehreren einzelnen, insbesondere über Gelenke miteinander gekoppelten, Abschnitten zusammengesetzt sein. Die Gestängehälften, Ausleger und/oder Abschnitte sind dabei ferner individuell oder zumindest teilweise abhängig voneinander, insbesondere um zumindest jeweils eine Drehachse, verschwenkbar und/oder ab- bzw. anwinkelbar.

Im Folgenden ist unter dem An- und Abwinkeln zumindest einer Gestängehälfte, eines Auslegers und/oder Abschnitts eine Drehbewegung der Gestängehälfte, des Auslegers und/oder zumindest eines Abschnitts des Gestänges um zumindest eine horizontale Drehachse, insbesondere die horizontale Drehachse der jeweiligen Gestängehälfte, des jeweiligen Auslegers und/oder des Abschnitts, zu verstehen. Mit anderen Worten bewirkt ein An- bzw. Abwinkeln eine Änderung des Winkels der jeweiligen Gestängehälfte, des jeweiligen Auslegers und/oder des Abschnitts gegenüber der Horizontalen. Dabei bewegt sich die jeweilige Gestängehälfte, der jeweilige Ausleger und/oder der Abschnitt beim Anwinkeln vom Boden weg und beim Abwinkeln zum Boden hin. Ein Verschwenken oder Verkippen des Gestänges bezeichnet dementsprechend ein Anwinkeln einer Gestängehälfte, eines Auslegers und/oder eines Abschnitts bei entsprechendem Abwinkeln der anderen Gestängehälfte, des anderen Auslegers und/oder Abschnitts.

Weiterhin bezeichnet im Folgenden der Begriff "überschreiten", sofern nicht anders explizit angegeben, ein Überqueren einer Grenzhöhe durch die Einsatzhöhe zumindest eines Abschnitts und/oder Punktes des Gestänges ausgehend von einer zumindest nahezu waagerechten Neigung und/oder Lage des zumindest einen Abschnitts, insbesondere in Bezug auf eine als künstlicher Horizont ausgeführten Referenzebene. Somit kann hierbei ein "Überschreiten" sowohl ein Überqueren der Grenzhöhe durch die Einsatzhöhe in einer Richtung vom Boden weg als auch zum Boden hin bedeuten. Darüber hinaus bezeichnet im Folgenden der Begriff "unterschreiten", sofern nicht anders explizit angegeben, ein Überqueren der Grenzhöhe durch die Einsatzhöhe in Richtung einer zumindest im Wesentlichen waagerechten Lage des zumindest einen Abschnitts, insbesondere in Bezug auf eine als künstlichen Horizont ausgeführten Referenzebene. Mit anderen Worten kann die zumindest eine Grenzhöhe erst unterschritten werden, wenn diese zuvor ausgehend von einer zumindest nahezu im Wesentlichen waagerechten Lage, insbesondere in Bezug auf die als künstlichen Horizont ausgeführten Referenzebene, überschritten ist.

Die Referenzebene kann hierbei je nach Anwendungsfall und/oder Bedarf die landwirtschaftliche Nutzfläche, insbesondere ein gemitteltes Bodenprofil des Ackerbodens auf dem das landwirtschaftliche Gerät sich bewegt, einen künstlichen Horizont, d.h. eine errechnete Ebene, oder ein Höhenprofil des Pflanzenbestandes darstellen. Alternativ oder zusätzlich kann die Referenzebene eine beliebig vorgegebene, insbesondere im Steuer- und/oder Regelsystem hinterlegte, Ebene im Raum sein. Darüber hinaus kann die Referenzebene alternativ aus zumindest einem Punkt, vorzugsweise mehreren Punkten, entlang einer beliebigen, insbesondere gekrümmten, Kontur gebildet sein.

Der Schnittpunkt stellt erfindungsgemäß einen Punkt entlang einer, insbesondere lokalen, Störkontur auf und/oder neben der landwirtschaftlichen Nutzfläche dar, der mit zumindest einem Abschnitt des Gestänges, insbesondere einem auf der Geometrie des Gestänges befindlichen Punkt, in Kontakt bringbar ist. Insbesondere befinden sich die Störkontur und/oder der Punkt entlang der Störkontur während des Betriebs über- und/oder unterhalb zumindest eines Abschnitts des Gestänges.

Darüber hinaus stellt der Fußpunkt erfindungsgemäß einen Punkt an der Stelle auf der Referenzebene und/oder der landwirtschaftlichen Nutzfläche, insbesondere entlang des Bodenprofils und/oder des Pflanzenbestandes, dar, an der ein vom Schnittpunkt in vertikaler Richtung ausgehendes Lot die Referenzebene und/oder die landwirtschaftliche Nutzfläche, insbesondere das Bodenprofil und/oder den Pflanzenbestand, trifft. Besonders bevorzugt bildet das Lot den kürzesten Abstand, insbesondere die kürzeste Strecke, zwischen dem Schnittpunkt und dem Fußpunkt, wobei das Lot vorzugsweise senkrecht zur Referenzebene und/oder landwirtschaftliche Nutzfläche, insbesondere dem Bodenprofil und/oder Pflanzenbestand, ausgerichtet ist. Vorzugsweise wird die Grenzhöhe entlang des Lots, insbesondere mit einem vertikalen Abstand zum Schnittpunkt, vorgegeben.

Infolge dieser Maßnahme ist die Einsatzhöhe und damit der Schwenkbereich, insbesondere das An- und/oder Abwinkeln, zumindest eines Abschnitts auf die individuellen Bedingungen, insbesondere Störkonturen, einer landwirtschaftlichen Nutzfläche begrenzbar. Die zumindest eine Grenzhöhe ist hierbei von einem Bediener, insbesondere vor dem Betrieb, über ein mobiles Anzeige- und/oder Eingabemittel eingebbar und somit dem Steuer- und/oder Regelsystem vorgebbar. Alternativ oder zusätzlich kann die zumindest eine Grenzhöhe automatisiert, insbesondere in Abhängigkeit eines auf einer ablegbaren Karte hinterlegten Bodenprofils, vom Steuer- und/oder Regelsystem abrufbar und/oder auswählbar sein. Vorzugsweise ist die Einsatzhöhe auf zumindest eine erste und zweite Grenzhöhe begrenzbar, wobei die erste Grenzhöhe in vertikaler Richtung über der zweiten Grenzhöhe angeordnet ist. Somit ist die Einsatzhöhe vorzugsweise in eine Richtung vom Boden weg, als auch zum Boden hin begrenzbar. Mittels einer derartigen Ausführungsform kann die Bedienung, Steuerung und/oder Regelung des landwirtschaftlichen Geräts, insbesondere des Gestänges, besonders vereinfacht und gleichzeitig betriebssicher ausgebildet werden.

In einer bevorzugten Ausführungsform des erfindungsgemäßen landwirtschaftlichen Geräts übersteigt die zumindest eine Grenzhöhe eine vom Bodenprofil einer Aufstandsfläche und/oder der Gerätehöhe des landwirtschaftlichen Geräts abhängige Bezugshöhe. Vorzugsweise befindet sich bei zumindest einer ersten und zweiten vorgebbaren Grenzhöhe, die zumindest eine erste Grenzhöhe über der Bezugshöhe, während sich die zumindest eine zweite Grenzhöhe unter der Bezugshöhe befindet. Die Bezugshöhe kann erfindungsgemäß gleich zur Gerätehöhe sein oder alternativ oder zusätzlich zumindest eine weitere, vorzugsweise vorgebbare, Höhe nach Art eines Offsets umfassen, wobei die zumindest eine weitere Höhe, insbesondere der Offset, sowohl ein positiver als auch negativer Höhenwert sein kann. Alternativ oder zusätzlich kann die zumindest eine Grenzhöhe zumindest nahezu gleich zur Bezugshöhe sein. Die Aufstandsfläche entspricht hierbei einem Teilbereich der landwirtschaftlichen Nutzfläche, auf dem die Aufstandselemente, insbesondere Räder, des landwirtschaftlichen Geräts und/oder einer dem landwirtschaftlichen Gerät zugeordneten Zugmaschine aufstehen. Die berücksichtigbare Größe, insbesondere der Durchmesser, der Aufstandsfläche ist hierbei bevorzugt über zumindest eine vorgebbare Abmessung anpassbar. Alternativ oder zusätzlich kann die Bezugshöhe auch eine maximale oder minimale Höhe des Bodenprofils sein, insbesondere in Bezug zur Referenzebene oder zu einem gemittelten Bodenprofil auf einer aktuellen Aufstandsfläche.

In einer Weiterbildung des erfindungsgemäßen landwirtschaftlichen Geräts umfasst das landwirtschaftliche Gerät zumindest eine zweite Sensoranordnung die dazu eingerichtet ist, einen aktuellen Mittenabstand zwischen der Drehachse und der Referenzebene und/oder der landwirtschaftlichen Nutzfläche, insbesondere dem Bodenprofil und/oder dem Pflanzenbestand, zu erfassen, wobei zur Bestimmung der Einsatzhöhe der Mittenabstand vom Steuer- und/oder Regelsystem berücksichtigbar ist. Vorzugsweise ist die zumindest eine erste Sensoranordnung hierbei dazu eingerichtet, eine relative Neigung, Lage und/oder einen Abstand des Gestänges, insbesondere des zumindest einen Abschnitts, bezogen auf die Referenzebene zu ermitteln. Mittels des zusätzlich ermittelbaren Mittenabstandes, der insbesondere den Abstand von der Drehachse des Gestänges und/oder des zumindest einen Abschnitts bezogen auf das Bodenprofile und/oder den Pflanzenbestand darstellt, ist somit die absolute Neigung, Lage und/oder Höhe des Gestänges und/oder des zumindest einen Abschnitts des Gestänges und somit, insbesondere mittels automatisierter Rechenoperationen, die Einsatzhöhe bestimmbar. Vorzugsweise sind dabei auch georeferenzierte Informationen, insbesondere mittels zumindest einem dem landwirtschaftlichen Gerät und/oder Gestänge zugeordneten Ortungssensors, berücksichtigbar. Besonders bevorzugt umfasst die zumindest eine zweite Sensoranordnung zumindest ein Wegmesssystem, das insbesondere an zumindest einem anderen Stellglied angeordnet ist und/oder einem anderen Stellglied zugeordnet ist und dazu eingerichtet ist, den Hub des anderen Stellglieds zu erfassen.

Alternativ oder zusätzlich kann die erste, zweite und/oder eine dritte Sensoranordnung zumindest einen, insbesondere optischen und/oder berührungslosen, Abstandssensoren umfassen. Der Abstandssensor kann dabei beispielsweise als Infrarot- oder Ultraschallsensor ausgebildet sein, der dazu eingerichtet ist, den Abstand zwischen der Sensoroberfläche und dem Ackerboden, insbesondere dem Bodenprofil, zu erfassen. Vorzugsweise sind mehrere Abstandssensoren entlang des zumindest einen Abschnitts, insbesondere am Ausleger und/oder Gestänge, angeordnet und mit der Sensoroberfläche in Richtung des Ackerbodens, insbesondere des Bodenprofils, ausgerichtet. Ferner ist besonders bevorzugt die Neigung, Lage und/oder ein Winkel zumindest eines Abschnitts des Gestänges über zumindest zwei daran angeordnete Abstandssensoren bestimmbar.

Darüber hinaus ist denkbar, dass eine mit der Topologie bzw. dem Bodenprofil der landwirtschaftlichen Nutzfläche hinterlegte Karte vom Steuer- und/oder Regelsystem des erfindungsgemäßen landwirtschaftlichen Geräts abrufbar und/oder zur Bestimmung der zumindest einen Grenzhöhe berücksichtigbar ist. Ferner können auch sich auf und/oder neben der landwirtschaftlichen Nutzfläche befindliche und/oder auf bzw. neben der landwirtschaftlichen Nutzfläche ragende Störkonturen auf einer derartigen Karte hinterlegt sein.

Erfindungsgemäß kann das landwirtschaftliche Gerät zumindest ein Stellglied, das als ein hydraulisch und/oder pneumatisch und über zwei, vorzugsweise proportional steuer- und/oder regelbare, Druckregelventile betreibbarer Stellzylinder ausgebildet ist, umfassen, wobei jedem Druckregelventil wenigstens eine, insbesondere zwischen dem Stellzylinder und dem Druckregelventil angeordnete und mit dem Steuer- und/oder Regelsystem signalübertragend verbundene erste Ventilanordnung mit zumindest einem Ventil zugeordnet ist. Vorzugsweise ist das Stellglied als ein doppelwirkender Stellzylinder ausgebildet, dessen Kolben beidseitig mit Druck beaufschlagbar ist. Besonders bevorzugt umfasst die zumindest eine Ventilanordnung dabei zumindest ein erstes und zweites Ventil das jeweils einer mit Druck beaufschlagbaren Seite des Stellglieds, insbesondere des Kolbens, zugeordnet ist, wobei die Ventile dazu eingerichtet sind, den zum Stellglied, insbesondere Kolben, förderbaren Druck zumindest teilweise freizugeben und/oder zu sperren. Insbesondere ist das zumindest eine Ventil als ein pneumatisches und/oder hydraulisches, insbesondere proportionales, Wegeventil ausgebildet. Ferner kann das Ventil hierbei in zumindest einer seiner Stellungen eine Rückschlagfunktion umfassen, mittels der der an dem Ventil anstehende Druck zumindest nahezu nur in eine Fließrichtung durch das Ventil, insbesondere zum Stellglied hin, förderbar ist.

Alternativ oder zusätzlich kann das zumindest eine Stellglied als ein motorischer Aktuator ausgebildet sein, das dazu eingerichtet ist, den zumindest einen Abschnitt des Gestänges, insbesondere den Ausleger, zumindest teilweise zu verschwenken und/oder an- bzw. abzuwinkeln.

In einer bevorzugten Ausführungsform des erfindungsgemäßen landwirtschaftlichen Geräts ist die erste Ventilanordnung in Abhängigkeit der zumindest einen Grenzhöhe und der Einsatzhöhe des zumindest eines Abschnitts des Gestänges ansteuerbar und/oder regelbar. Wird die Grenzhöhe von der Einsatzhöhe erreicht und/oder überschritten ist die erste Ventilanordnung derart umschaltbar, dass ein weiterer Anstieg der Überschreitung blockiert ist. Bei einer bevorzugten Ausführungsform mit einem ersten und zweiten Ventil innerhalb der Ventilanordnung, ist das zumindest eine erste Ventil bei Erreichung und/oder Überschreitung der Grenzhöhe geöffnet, während das zumindest eine zweite Ventil geschlossen ist. Somit kann eine weitere Steuerung- und/oder Regelung der Einsatzhöhe, insbesondere des Drucks für das zumindest eine Stellglied, über die Druckregelventile fortgeführt werden. Insbesondere ist das Stellglied dabei derart vom Steuer- und/oder Regelsystem ansteuerbar und/oder regelbar, dass das Gestänge und/oder der zumindest eine Abschnitt des Gestänges nur in die Richtung schwenkbar und/oder an- bzw. abwinkelbar ist, bei der die Grenzhöhe von der Einsatzhöhe unterschritten wird. Mittels einer derartigen Ausführungsform ist die Betriebssicherheit, insbesondere bei einem Fehlsignal und/oder einer fehlerhaften Funktion der zumindest einen ersten, zweiten und/oder dritten Sensoranordnung, besonders betriebssicher ausgebildet.

Erfindungsgemäß kann des Weiteren das Gestänge wenigstens einen mit dem landwirtschaftlichen Gerät gekoppelten Mittelteil und wenigstens zwei, vorzugsweise gelenkig klappbare, an dem Mittelteil schwenkbar, an- bzw. abwinkelbar gelagerte Ausleger aufweisen, wobei das zumindest eine Stellglied dabei zwischen dem wenigstens einen Mittelteil und zumindest einem der Ausleger angeordnet ist, und wobei die erste Sensoranordnung dabei an zumindest einem der Ausleger angeordnet ist.

Besonders bevorzugt ist die zumindest eine erste Sensoranordnung als Neigungssensor, Beschleunigungssensor und/oder als Drehratensensor ausgebildet. Insbesondere ist das Steuer- und/oder Regelsystem dazu eingerichtet, das zumindest eine Sensorsignal der ersten Sensoranordnung derart zu verarbeiten, dass eine, vorzugsweise zur Referenzebene relative, Neigung und/oder Lage zumindest eines Abschnitts des Gestänges mittels der zumindest einen ersten Sensoranordnung bestimmbar ist. Ferner ist eine Ausführungsform bevorzugt, bei der die zumindest eine erste Sensoranordnung an einem zur Drehachse zugewandten Abschnitt, insbesondere an einem in eine vom Mittelteil ausgehende erste Richtung sich erstreckenden ersten Ausleger angeordnet ist. Somit ist eine Änderung der Neigung, Lage und/oder des Abstands während des Betriebs direkt ermittelbar und somit mit besonders hoher Genauigkeit erfassbar.

In einer anderen Weiterbildung des erfindungsgemäßen landwirtschaftlichen Geräts ist zwischen den Auslegern oder dem Mittelteil und jeweils jedem Ausleger zumindest ein Sensor zur Erfassung eines Winkels, angeordnet, wobei das Steuer- und/oder Regelsystem dazu eingerichtet ist, die Neigung und/oder Lage, insbesondere Einsatzhöhe, der Ausleger in Abhängigkeit des Sensorsignals der ersten Sensoranordnung und den vom Sensor erfassbaren Winkel zu bestimmen. Vorzugsweise ist der Sensor zur Erfassung des Winkels als Potentiometer ausgebildet. Besonders bevorzugt ist die zumindest eine erste Sensoranordnung an einem zur Drehachse zugewandten Abschnitt, insbesondere an einem in eine vom Mittelteil ausgehende erste Richtung sich erstreckenden ersten Ausleger angeordnet und das Potentiometer an einem in eine vom Mittelteil ausgehende zweite Richtung sich erstreckenden zweiten Ausleger oder zwischen dem ersten und zweiten Ausleger, insbesondere einer gemeinsame Drehachse, angeordnet. Alternativ oder zusätzlich ist dabei zumindest ein weiterer Sensor zur Bestimmung des Winkels, insbesondere ein Potentiometer, an der Drehachse des Auslegers an dem sich die zumindest eine erste Sensoranordnung befindet angeordnet. Mittels einer derartigen Ausführungsform ist somit zum einen ein Winkel des ersten Auslegers um dessen Drehachse, als auch ein Winkel des zweiten Auslegers um dessen Drehachse, insbesondere die gemeinsame Drehachse, bestimmbar.

Ferner ist eine Ausführungsform des erfindungsgemäßen landwirtschaftlichen Geräts bevorzugt, bei dem vom Steuer- und/oder Regelsystem die Geometrie, insbesondere die Länge und/oder Höhe, zumindest eines Abschnitts des Gestänges, insbesondere zumindest eines Auslegers, berücksichtigbar ist. Alternativ oder zusätzlich kann die Geometrie, insbesondere die Länge und/oder Höhe des zumindest einen Abschnitts, manuell von einem Bediener eingebbar und/oder automatisiert vom Steuer- und/oder Regelsystem, insbesondere in Abhängigkeit eines Klappzustandes des Gestänges und/oder der Abschnitte, abrufbar und/oder auswählbar sein. Das Steuer- und/oder Regelsystem ist hierbei dazu eingerichtet, die Lage und/oder Einsatzhöhe zumindest eines Punktes, insbesondere der Enden des Gestänges, in Bezug auf die zumindest eine Grenzhöhe mittels der Neigung und/oder des zumindest einen gemessenen Winkels und der Geometrie, insbesondere der Länge und/oder Höhe zumindest eines Abschnitts, zu ermitteln.

Des Weiteren ist eine Ausführungsform des landwirtschaftlichen Geräts bevorzugt, bei dem die zumindest eine Grenzhöhe während des Betriebs fortlaufend, insbesondere bei einer Änderung des Schnittpunktes und/oder Fußpunktes, anpassbar ist. Besonders bevorzugt ist die zumindest eine Grenzhöhe dabei automatisiert vom Steuer- und/oder Regelsystem anpassbar.

Darüber hinaus ist ein erfindungsgemäßes landwirtschaftliches Gerät bevorzugt, bei dem die zumindest zwei Ausleger über zumindest ein, vorzugsweise hydraulisch und/oder pneumatisch betreibbares, Ausgleichsglied miteinander gekoppelt sind und die Neigung und/oder Lage, insbesondere der Winkel, zwischen den beiden Auslegern mittels des zumindest einen Ausgleichsglieds beeinflussbar ist. Das Ausgleichsglied ist vorzugsweise als ein, insbesondere pneumatischer und/oder hydraulischer, Stellzylinder ausgebildet, wobei ein doppelwirkender Stellzylinder besonders bevorzugt ist. Alternativ oder zusätzlich kann das Ausgleichsglied auch als motorischer Aktuator ausgebildet sein.

In einer weiteren bevorzugten Ausführungsform des erfindungsgemäßen landwirtschaftlichen Geräts ist dem Ausgleichsglied zumindest eine zweite Ventilanordnung mit zumindest einem, vorzugsweise proportional steuer- und/oder regelbaren, Ventil zugeordnet, wobei die Schaltzustände der ersten und zweiten Ventilanordnung, insbesondere der Ventile, in Abhängigkeit der zumindest einen Grenzhöhe und der Einsatzhöhe anpassbar sind. Vorzugsweise umfasst die zweite Ventilanordnung ein drittes und ein viertes Ventil, insbesondere mit zumindest einer Stellung die eine Rückschlagfunktion aufweist. Das Ausgleichsglied und/oder die zweite Ventilanordnung sind über pneumatische und/oder hydraulische Leitungen mit einer, insbesondere Druckfördernden, Fördereinrichtung und/oder zumindest einem Druckspeicher fluidleitend gekoppelt. Ferner sind das Ausgleichsglied und/oder die zumindest eine zweite Ventilanordnung somit mit einem einstellbaren Druck beaufschlagbar.

In einer weiteren Weiterbildung des erfindungsgemäßen landwirtschaftlichen Geräts ist das landwirtschaftliche Gerät als eine, insbesondere gezogene oder selbstfahrende, Feldspritze ausgebildet ist. Die Feldspritze umfasst neben zumindest einem, insbesondere aus zumindest zwei Auslegern und/oder mehreren Abschnitten ausgebildetes, Gestänge, außerdem zumindest einen Vorratsbehälter der zum Bevorraten des Spritzmittels, insbesondere Pflanzenschutzmittels und/oder Düngemittels, dient. Darüber hinaus umfasst die Feldspritze mehrere Stellelemente die zum Ausbringen des Spritzmittels als an dem Gestänge angeordnete Spritzdüsen ausgebildet sind. Das Spritzmittel ist dabei mittels einem Fördersystem ausgehend von dem zumindest einen Vorratsbehälter den Spritzdüsen in einstellbaren Mengen und/oder mit einstellbarem Druck zubringbar. Vorzugsweise sind die Spritzdüsen jeweils als Einfach- oder Mehrfachdüsenkörper ausgebildet.

In einer alternativen jedoch ebenfalls bevorzugten Ausführungsform ist das landwirtschaftliche Gerät zumindest teilweise als eine Sä- und/oder Düngermaschine mit einem Gestänge zum Ausbringen von granularem Material, insbesondere Saatgut und/oder Dünger, ausgebildet.

Die der Erfindung zugrunde liegende Aufgabe wird ferner durch ein Verfahren zum Betreiben eines landwirtschaftlichen Geräts gelöst, wobei das landwirtschaftliche Gerät nach zumindest einem der vorstehenden beschriebenen Ausführungsformen ausgebildet ist. Hinsichtlich der Vorteile und Modifikationen des erfindungsgemäßen Verfahrens wird zunächst auf die Vorteile und Modifikationen des landwirtschaftlichen Geräts verwiesen.

Innerhalb des erfindungsgemäßen Verfahrens wird die Neigung und/oder Lage des Gestänges mittels der ersten Sensoranordnung in Bezug auf die Referenzebene erfasst. Dabei wird ein Sensorsignal in Abhängigkeit der erfassten Neigung, Lage und/oder Abstands mittels der ersten Sensoranordnung erzeugt. Zusätzlich wird die auf die Referenzebene, insbesondere das Bodenprofil und/oder den Pflanzenbestand, bezogene aktuelle Einsatzhöhe des zumindest einen

Abschnitts des Gestänges in Abhängigkeit des Sensorsignals mittels des Steuer- und/oder Regelsystems ermittelt. Vorzugsweise wird die Einsatzhöhe mittels des zumindest einen Stellglieds gesteuert und/oder geregelt.

Erfindungsgemäß wird die zumindest eine Grenzhöhe die durch den Abstand zwischen dem wenigstens einen entlang der Referenzebene, insbesondere dem Bodenprofil und/oder dem Pflanzenbestand, befindlichen Fußpunkt und wenigstens dem einen in vertikaler Richtung dazu beabstandeten entlang der Störkontur befindlichen Schnittpunkt gebildet ist, vorgegeben und/oder abgerufen. Erfindungsgemäß wird die Einsatzhöhe des zumindest einen Abschnitts des Gestänges, insbesondere eines äußersten Punkts des Gestänges innerhalb einer aktuellen Arbeitsstellung, wenigstens in etwa auf die zumindest eine Grenzhöhe mittels des Steuer- und/oder Regelsystems und/oder dem zumindest einen Stellglieds begrenzt.

Bei einer besonders bevorzugten Ausführungsform des erfindungsgemäßen Verfahrens wird während die zumindest eine Grenzhöhe von der Einsatzhöhe erreicht oder überschritten wird, eine weitere Erhöhung der Überschreitung mittels des Steuer- und/oder Regelsystems und/oder des Stellglieds zumindest nahezu verhindert, insbesondere blockiert.

Darüber hinaus ist ein erfindungsgemäßes Verfahren bevorzugt, bei dem während die zumindest eine Grenzhöhe von der Einsatzhöhe unterschritten wird, die Einsatzhöhe mittels des Steuer- und/oder Regelsystems und/oder des Stellglieds gesteuert und/oder geregelt wird.

In einer besonders bevorzugten Weiterbildung des erfindungsgemäßen Verfahrens umfasst das Steuer- und/oder Regelsystem zumindest einen ersten und zweiten Regelungsmodus zum Steuern und/oder Regeln der Einsatzhöhe, wobei der erste Regelungsmodus während einer Unterschreitung der zumindest einen Grenzhöhe und der zweite Regelungsmodus während einer Überschreitung der zumindest einen Grenzhöhe aktiviert ist. Insbesondere weist der zumindest eine erste Regelungsmodus ein zum zumindest einen zweiten Regelungsmodus zumindest teilweise abweichendes Regelverhalten auf. Das Regelverhalten ist hierbei gebildet aus der Kombination der verwendeten Sensoranordnungen, insbesondere Sensoren, das Ansprechverhalten, insbesondere der Empfindlichkeit und/oder Geschwindigkeit, zur Anpassung der Schaltzustände der Ventilanordnungen, insbesondere der Ventile, und/oder des Drucks zur Steuerung- und/oder Regelung des zumindest einen Stellglieds und/oder Ausgleichsglieds. Ferner werden bevorzugt in Abhängigkeit des Regelungsmodus vom Steuer- und/oder Regelsystem unterschiedliche Sensorsignale, insbesondere von unterschiedlichen Sensoren, zur Bestimmung der Neigung, Lage und/oder Einsatzhöhe verwendet.

Besonders bevorzugt ist die Einsatzhöhe des Gestänges, insbesondere zumindest eines Abschnitts, im ersten Regelungsmodus mittels der zumindest einen dritten Sensoranordnung, insbesondere der Abstandssensoren, und innerhalb des zweiten Regelungsmodus mittels der zumindest einen ersten Sensoranordnung, insbesondere der Neigungs-, Beschleunigungs- und/oder als Drehratensensoren, steuer- und/oder regelbar.

Bei einer weiteren besonders bevorzugten Ausführungsform des erfindungsgemäßen Verfahrens wird ein aktueller Mittenabstands zwischen der Drehachse und der Referenzebene und/oder der landwirtschaftliche Nutzfläche, insbesondere dem Bodenprofil und/oder dem Pflanzenbestand, mittels zumindest einer zweiten Sensoranordnung erfasst. Alternativ oder zusätzlich wird der aktuelle Mittenabstand mittels des Steuer- und/oder Regelsystems vorgegeben und/oder abgerufen. Insbesondere wird die Einsatzhöhe mittels des Steuer- und/oder Regelsystems unter Berücksichtigung des Mittenabstands ermittelt.

Das Gestänge des landwirtschaftlichen Geräts kann wenigstens einen mit dem landwirtschaftlichen Gerät gekoppelten Mittelteil und wenigstens zwei, vorzugsweise gelenkig klappbare, an dem Mittelteil schwenkbar gelagerte Ausleger aufweisen, wobei das zumindest eine Stellglied dabei zwischen dem wenigstens einen Mittelteil und zumindest einem der Ausleger angeordnet ist, und wobei die erste Sensoranordnung dabei an zumindest einem der Ausleger angeordnet ist.

In einer weiteren besonders bevorzugten Weiterbildung des erfindungsgemäßen Verfahrens wird die Neigung und/oder Lage, insbesondere Einsatzhöhe, des zumindest einen Auslegers mittels der ersten Sensoranordnung erfasst. Daraufhin wird ein erster und/oder zweiter Winkel zwischen den Auslegern oder dem Mittelteil und den Auslegern mittels zumindest einem Sensor erfasst. Alternativ oder zusätzlich wird die Neigung und/oder Lage des Mittelteils und/oder der Ausleger in Abhängigkeit der erfassten Winkel ermittelt.

Das Stellglied des erfindungsgemäßen landwirtschaftlichen Geräts kann als ein hydraulisch und/oder pneumatisch und über zwei, vorzugsweise proportional steuer- und/oder regelbare, Druckregelventile betreibbarer Stellzylinder ausgebildet sein, wobei dabei jedem Druckregelventil wenigstens eine, insbesondere zwischen dem Stellzylinder und dem Druckregelventil angeordnete und mit dem Steuer- und/oder Regelsystem signalübertragend verbundene erste Ventilanordnung mit zumindest einem Ventil zugeordnet ist.

Bei einer weiteren vorteilhaften Ausführungsform des erfindungsgemäßen Verfahrens wird der Schaltzustand der ersten Ventilanordnung mit dem zumindest einen Ventil in Abhängigkeit der zumindest einen Grenzhöhe und der aktuellen Einsatzhöhe geändert.

Die zumindest zwei Ausleger des erfindungsgemäßen landwirtschaftlichen Geräts können über zumindest ein, vorzugsweise hydraulisch und/oder pneumatisch betreibbares, Ausgleichsglied miteinander gekoppelt und die Neigung und/oder Lage, insbesondere der Winkel, zwischen den beiden Auslegern mittels des zumindest einen Ausgleichsglieds beeinflussbar sein.

In einer weiteren vorteilhaften Weiterbildung des erfindungsgemäßen Verfahrens wird dem Ausgleichsglied zumindest eine zweite Ventilanordnung mit zumindest einem, vorzugsweise proportional steuer- und/oder regelbaren, Ventil zugeordnet, wobei dabei die Schaltzustände der ersten und zweiten Ventilanordnung, insbesondere der Ventile, in Abhängigkeit der zumindest einen Grenzhöhe und der Einsatzhöhe angepasst werden.

Ferner ist ein erfindungsgemäßes Verfahren bevorzugt, bei dem die Einsatzhöhe vorausschauend während des Betriebs auf die zumindest eine Grenzhöhe angepasst wird.

Weitere Einzelheiten der Erfindung sind der Beispielsbeschreibung und den Zeichnungen zu entnehmen. Die Zeichnungen zeigen

Fig. 1     eine erfindungsgemäßes landwirtschaftliches Gerät in einer perspektivischen Ansicht von hinten;

Fig.2a eine Detailansicht auf ein erstes Ausführungsbeispiel eines erfindungsgemäßen Gestänges an einem landwirtschaftlichen Gerät gemäß Fig.1;

Fig.2b das erste Ausführungsbeispiel des Gestänges aus der Fig.2a in einer verschwenkten Stellung;

Fig.2c eine Detailansicht auf ein zweites Ausführungsbeispiel eines erfindungsgemäßen Gestänges an einem landwirtschaftlichen Gerät gemäß Fig.1;

Fig.3a eine erste Heckansicht eines landwirtschaftlichen Geräts gemäß Fig.1 während einer Unterschreitung einer Grenzhöhe; und

Fig.3b eine zweite Heckansicht eines landwirtschaftlichen Geräts gemäß Fig.1 während einer Überschreitung der Grenzhöhe.

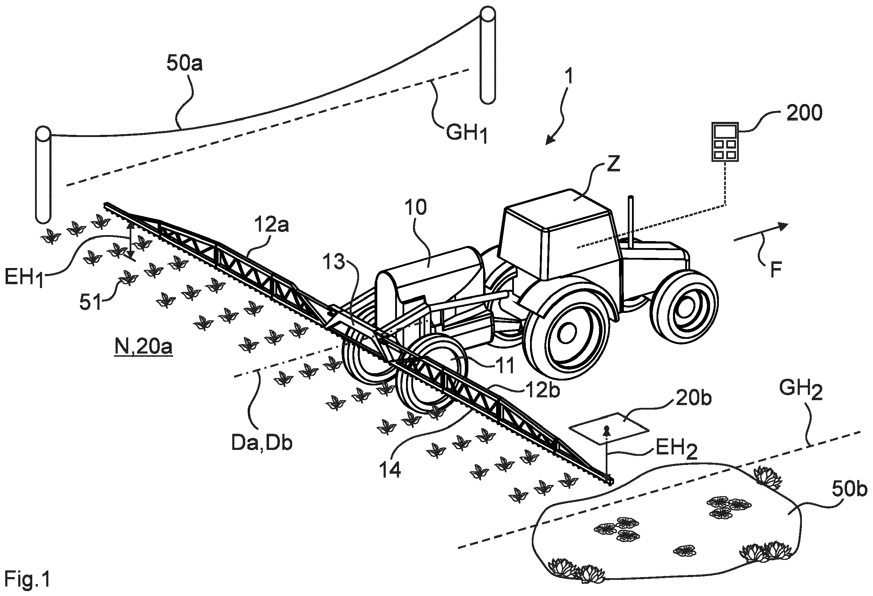

Ein als Feldspritze 1 ausgebildetes landwirtschaftliches Gerät mit einem Gestänge 12a, 12b zum Ausbringen von Material, insbesondere Spritzmittel, auf einer landwirtschaftlichen Nutzfläche N und/oder deren Pflanzenbestand 51 ist in der Fig. 1 gezeigt. Es ist zu erkennen, dass das Gerät 1 als eine von einer Zugmaschine Z in einer Fahrtrichtung F gezogene Verteilmaschine ausgeführt ist. Das Material ist ausgehend von einem Vorratsbehälter 10, in dem das Material, insbesondere Pflanzenschutzmittel und/oder Düngemittel, bevorratet ist, über ein nicht gezeigtes Fördersystem mehreren als Spritzdüsen 14 ausgebildeten Stellelementen, die nebeneinander an dem Gestänge 12a, 12b angeordnet sind, zubringbar und über diese ausbringbar.

Das Gestänge 12a, 12b umfasst jeweils einen sich von einem Mittelteil 13 nach links und nach rechts erstreckenden linken Ausleger 12a und rechten Ausleger 12b. Jeder Ausleger 12a, 12b ist aus mehreren gemeinsam und/oder zueinander verstellbaren, insbesondere um jeweils zumindest eine Drehachse Da, Db verschwenkbaren, Abschnitten ausgebildet. Das Gestänge 12a, 12b ist, insbesondere die Ausleger sind, ebenfalls um eine Drehachse Da, Db verschwenkbar und/oder an- bzw. abwinkelbar. Ferner ist ein Zustand des Gestänges 12a, 12b in Fig.1 gezeigt, bei dem das Gestänge 12a, 12b, insbesondere die Ausleger und/oder die Abschnitte, vollständig ausgeklappt sind.

Das landwirtschaftliche Gerät 1 umfasst außerdem ein Steuer- und/oder Regelsystem 200 das dazu eingerichtet ist, eine Einsatzhöhe EH1, EH2 des Gestänges zu steuern- und/oder zu regeln. Die Einsatzhöhe EH1, EH2 kann sich dabei auf ein, insbesondere gemitteltes, Bodenprofil N der landwirtschaftlichen Nutzfläche und/oder eine, insbesondere berechnete und vom Steuer- und/oder Regelsystem und/oder einem Bediener festgelegte, Referenzebene 20a, 20b beziehen. Die Referenzebene 20a, 20b kann erfindungsgemäß eine entlang eines künstlichen Horizonts, eines Bodenprofils und/oder einer beliebig festgelegten Ebene im Raum verlaufende Ebene sein. Ferner können für die Gestängehälften 12a, 12b, insbesondere die Ausleger und/oder Abschnitte, jeweils unterschiedliche Referenzebenen 20a, 20b vom Steuer- und/oder Regelsystem 200 berücksichtigt werden. Bei dem dargestellten Ausführungsbeispiel ist die für den linken Ausleger 12a, insbesondere den zumindest einen Abschnitt, und dessen erste Einsatzhöhe EH1 berücksichtige erste Referenzebene 20a als Bodenprofil N der landwirtschaftlichen Nutzfläche und die für den rechten Ausleger 12b, insbesondere den zumindest einen Abschnitt, und dessen zweite Einsatzhöhe EH2 berücksichtige zweite Referenzebene 20b als künstlicher Horizont ausgeführt. Alternativ oder zusätzlich zum dargestellten Ausführungsbeispiel können sich die Einsatzhöhen EH1, EH2 der unterschiedlichen Ausleger 12a, 12b, insbesondere zumindest einer der jeweiligen Abschnitte, auf die gleiche Referenzebene 20a, 20b beziehen.

Darüber hinaus sind eine als überirdische und/oder mit einem Abstand über der landwirtschaftlichen Nutzfläche N, insbesondere dem Ackerboden, verlaufende Hochspannungsleitung ausgebildete erste Störkontur 50a und eine als Wasserspiegel von einem Stillgewässer ausgebildete zweite Störkontur 50b in der Fig. 1 zu sehen. Alternativ oder zusätzlich können auch weitere Störkonturen 50a, 50b auf und/oder neben der landwirtschaftlichen Nutzfläche N angeordnet sein, wobei das Bodenprofil N des Ackerbodens und/oder der Pflanzenbestand 51 ebenfalls als Störkontur denkbar 50a, 50b sind.

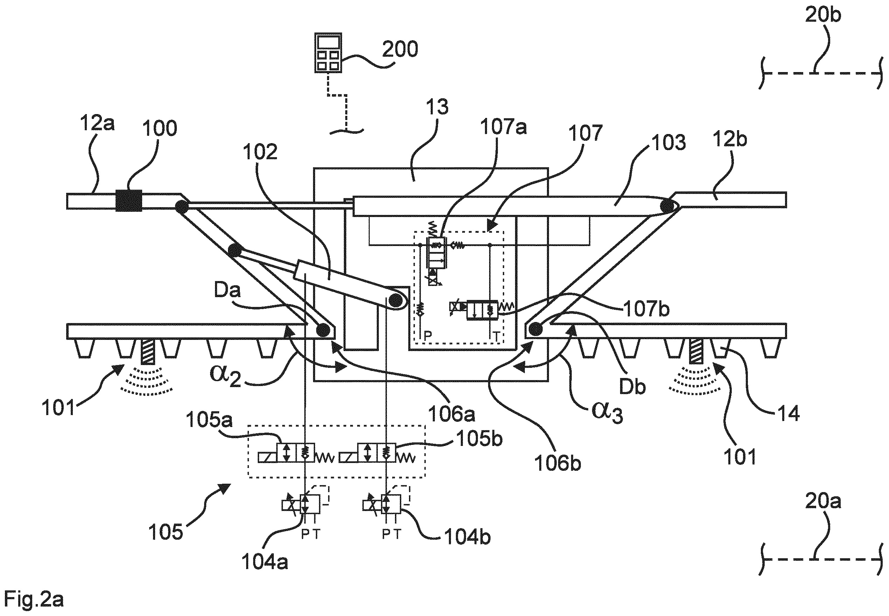

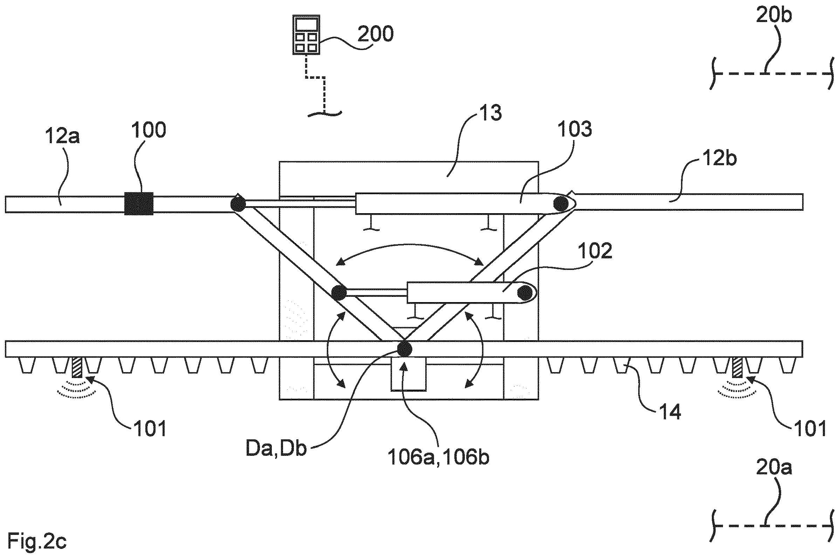

Die Fig.2a zeigt ein erstes Ausführungsbeispiel eines erfindungsgemäßen Gestänges 12a, 12b in einer Detailansicht und in zumindest nahezu waagerechter Stellung, insbesondere in einer Ausgangslage. Das landwirtschaftliche Gerät 1 umfasst dabei eine an dem Gestänge 12a, 12b, insbesondere linken Ausleger und/oder zumindest einen Abschnitt, angeordnete, insbesondere als zumindest ein Drehraten- und/oder Beschleunigungssensor ausgebildete, erste Sensoranordnung 100, die dazu eingerichtet ist, eine, insbesondere relative, Neigung und/oder Lage des Gestänges 12a, 12b in Bezug auf die Referenzebene 20a, 20b zu erfassen. Je nach Bedarf und/oder der Reglung können hierbei wie bereits weiter oben beschrieben die beiden gezeigten Referenzebenen 20a, 20b gemeinsam oder nur einer der beiden Referenzebenen 20a, 20b berücksichtigt werden. Des Weiteren ist an dem Gestänge 12a, 12b, insbesondere jeweils zumindest einem Abschnitt, eine dritte Sensoranordnung 101, insbesondere ein Abstandssensor, angeordnet, der dazu eingerichtet ist, zumindest einen Abstand des Gestänges 12a, 12b, insbesondere zumindest eines Abschnitts, in Bezug zur Referenzebene 20a, 20b, insbesondere dem Bodenprofil N und/oder Pflanzenbestand 51, zu erfassen. Der Abstandssensor 101 ist hierbei beispielsweise als Ultraschallsensor ausgebildet, wobei alternativ oder zusätzlich auch andere Arten von, insbesondere optischen, Abstandssensoren, denkbar sind.. Ferner ist die erste und/oder dritte Sensoranordnung 100, 101 dazu eingerichtet, zumindest ein Sensorsignal in Abhängigkeit der erfassten Neigung, Lage und/oder des Abstands, zu erzeugen. Das Steuer- und/oder Regelsystem, welches mit der zumindest einen ersten und/oder dritten Sensoranordnung 100, 101 signalübertragend verbunden ist, ist dazu eingerichtet, die auf, insbesondere die jeweilige, Referenzebene 20a, 20b bezogene aktuelle Einsatzhöhe EH1, EH2 zu ermitteln. Alternativ zum gezeigten Ausführungsbeispiel ist denkbar, dass der Abstand des Gestänges 12a, 12b zur Referenzebene 20a, 20b, insbesondere zur landwirtschaftlichen Nutzfläche N und/oder dem Pflanzenbestand 51, anstelle über die dritte Sensoranordnung 101 auch über die erste Sensoranordnung 100 erfassbar und/oder ermittelbar ist.

Das Steuer- und/oder Regelsystem 200 ist außerdem dazu eingerichtet, zumindest ein mit dem Gestänge 12a, 12b gekoppeltes Stellglied 102 zu steuern und/oder zu regeln, wobei das Stellglied 102 wiederrum dazu eingerichtet ist, die Einsatzhöhe EH1, EH2 des Gestänges 12a, 12b, insbesondere des zumindest einen Abschnitts, zu beeinflussen.

Das in dem Ausführungsbeispiel gezeigte Stellglied 102 ist als ein hydraulisch und/oder pneumatisch und über zwei, insbesondere proportional steuer- und/oder regelbare, Druckregelventile 104a, 104b betreibbarer Stellzylinder ausgebildet. Zwischen dem Stellglied 102 und den Druckregelventilen 104a, 104b ist eine mit dem Steuer- und/oder Regelsystem 200 signalübertragend verbundene erste Ventilanordnung 105 angeordnet. Die Ventilanordnung 105 umfasst hierbei ein erstes Ventil 105a und ein zweites Ventil 105b die jeweils dazu eingerichtet sind, einen durch das jeweilige Druckbegrenzungsventil 104a, 104b einstellbaren und/oder übertragbaren Druck in einer Richtung zum Stellglied 102 hin und/oder vom Stellglied 102 weg freizugeben oder zu sperren. Die Ventile 105a, 105b sind hierbei beispielhaft als Wegeventile mit jeweils zwei unterschiedlichen Schaltstellungen, insbesondere mit zumindest einer Rückschlagfunktion in einer der Schaltstellungen, ausgebildet. Je nach Schaltstellung der ersten Ventilanordnung 105, insbesondere der Ventile 105a, 105b, und/oder dem über die Druckregelventile 104a, 104b eingestellten Druck, kann das als Stellzylinder ausgebildete Stellglied 102 ein- und/oder ausgefahren bzw. dessen Länge verändert werden.

Das in der Fig.2a gezeigte Ausführungsbeispiel zeigt ferner ein in zwei Gestängehälften 12a, 12b, insbesondere Ausleger, und einen Mittelteil 13 aufgeteiltes Gestänge, wobei die Gestängehälften 12a, 12b, insbesondere Ausleger, um jeweils unterschiedliche Drehachsen Da, Db am mit dem landwirtschaftlichen Gerät 1 gekoppelten Mittelteil 13 schwenkbar gelagert sind.

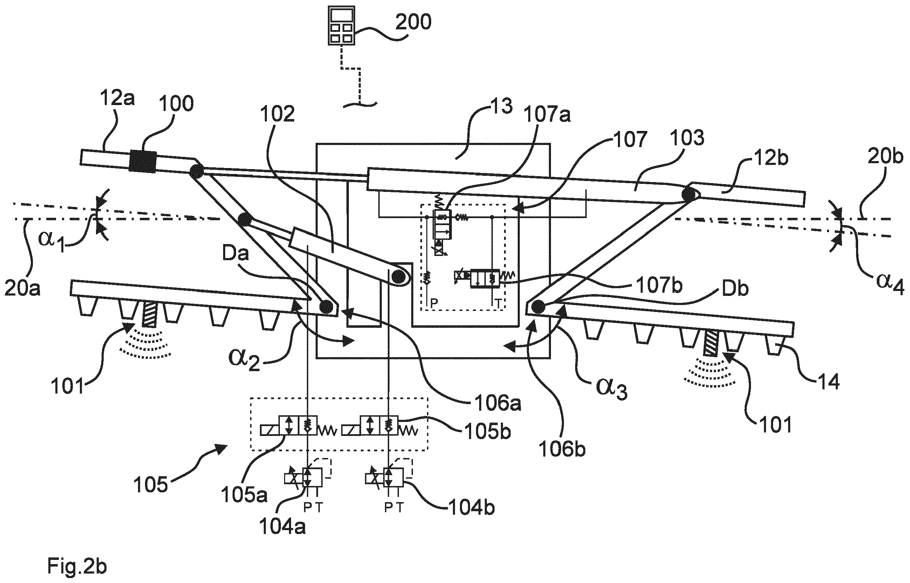

Das Gestänge 12a, 12b gemäß dem gezeigten Ausführungsbeispiel in Fig.2a kann somit beispielsweise wie in der Fig.2b angedeutet um die jeweiligen Drehachsen Da, Db verschwenkt bzw. an- und/oder abgewinkelt werden.

Das Gestänge kann alternativ hierzu auch wie in Fig.2b dargestellt ausgeführt sein, bei dem die Gestängehälften 12a, 12b, insbesondere die Ausleger, um eine gemeinsame Drehachse Da, Db verschwenkbar am Mittelteil 13 angeordnet sind.

Darüber hinaus umfasst das landwirtschaftliche Gerät 1, wie in der Fig.2a und Fig.2b gezeigt ist, an den Drehachsen Da, Db der Ausleger 12a, 12b, insbesondere Abschnitte, winkelerfassende Sensoren 106a, 106b, insbesondere Potentiometer, die dazu eingerichtet sind, die durch eine Verschwenkung eines Auslegers 12, 12b, insbesondere eines Abschnitts, hervorgerufene Winkeländerung, insbesondere Neigung, in Bezug auf die Referenzebene 20a, 20b zu erfassen. Somit ist die, insbesondere relative, Neigung, Lage und/oder Einsatzhöhe EH1, EH2, der Ausleger 12a, 12b, insbesondere der Abschnitte, vom Steuer- und/oder Regelsystem 200 in Abhängigkeit des Sensorsignals der ersten Sensoranordnung 100, insbesondere dem Winkel $\alpha1$ des ersten Auslegers 12a zur Referenzebene 20a, 20b und dem vom Sensor 106a, 106b, insbesondere Potentiometer, erfassten Winkel $\alpha2$, $\alpha3$ bestimmbar.

Insbesondere ist ein Winkel $\alpha4$ des zweiten Auslegers 12b zur, insbesondere gemeinsamen, Referenzebene 20a, 20b erfindungsgemäß mittels folgender Gleichung, insbesondere vom Steuer- und/oder Regelsystem 200 mittels zumindest einer Rechenoperation, bestimmbar:

$$\alpha4 = \alpha1 - \alpha2 + \alpha3$$

Die beispielhaften Ausführungsformen zeigen außerdem jeweils ein auf der einen Seite am Mittelteil 13 angeordnetes und ein auf der anderen Seite an einem der Ausleger 12a angeordnetes Stellglied 102. Ferner zeigen die beiden Ausführungsbeispiele ein zwischen den Auslegern 12a, 12b angeordnetes Ausgleichsglied 103, wobei die Ausleger 12a, 12b über das Ausgleichsglied 103 miteinander gekoppelt sind. Das Ausgleichsglied 103 ist dabei nach Art eines hydraulischen und/oder pneumatischen Stellzylinders, insbesondere gemäß dem Stellglied 102, ausgebildet. Zur Steuerung und/oder Regelung des Ausgleichsglieds 103 ist dem Ausgleichsglied 103 gemäß Fig.2a und Fig.2b eine zweite Ventilanordnung 107 mit einem dritten und vierten über das Steuer- und/oder Regelsystem 200 proportional steuer- und/oder regelbares Ventil 107a, 107b zugeordnet. Das dritte und vierte Ventil 107a, 107b ist über fluidleitende Leitungen sowohl mit einem pneumatischen und/oder hydraulischen Kreislauf, als auch mit dem Ausgleichsglied 103 gekoppelt. Das dritte und vierte Ventil 107a, 107b ist dabei dazu eingerichtet, das Ausgleichsglied 103 derart mit Druck zu beaufschlagen, dass ein Ein- bzw. Ausfahren des Ausgleichsglieds 103 gesperrt oder freigegeben ist. Ferner ist das Ausgleichsglied 103 derart über die Ventile 107a, 107b mit Druck beaufschlagbar, dass die Länge des Ausgleichsglieds 103 je nach Bedarf, insbesondere der Neigung, Lage und/oder Einsatzhöhe EH1, EH2 der Ausleger 12a, 12b, veränderbar ist.

Ist das Ein- oder Ausfahren des Ausgleichsglieds 103 gesperrt, kann das Gestänge 12a, 12b, insbesondere können die Ausleger gemeinsam und/oder abhängig voneinander, über das Stellglied 102 verschwenkt werden. Hierbei ist eine Verschwenkung und/oder Winkeländerung der jeweiligen Ausleger 12a, 12b zueinander hin oder voneinander weg durch das Ausgleichsglied 103 gesperrt. Eine Anpassung der ersten Einsatzhöhe EH1 geht somit mit einer Änderung der zweiten Einsatzhöhe EH2 einher.

Soll beispielsweise nur der linke Ausleger 12a angewinkelt werden, so kann bei dieser Ausführungsform das Stellglied 102 eingefahren werden. Um zu verhindern, dass die resultierende Bewegung des ersten Auslegers 12a auf den zweiten Ausleger 12b übertragen wird, kann das Ausgleichsglied 103 ebenfalls eingefahren werden. Dies kann beispielsweise durch eine aktive Ansteuerung des zweiten Ausgleichsglieds 103 geschehen.

Soll beispielsweise nur der zweite Ausleger 12b angewinkelt werden, so kann bei dieser Ausführungsform das Ausgleichsglied 103 eingefahren werden. Die Länge des Stellglieds 102 kann hingegen beibehalten werden. Dies kann beispielsweise durch aktive Ansteuerung des Stellglieds 102 erfolgen, aber auch durch ein Verriegeln des Stellglieds 102, beispielsweise über die erste Ventilanordnung 105, insbesondere das erste und/oder zweite Ventil 105a, 105b. In diesem Fall wird also der linke Ausleger 12a mittels des Stellglieds 102 fixiert.

Alternativ oder zusätzlich zur beschriebenen Ausführungsform können das Stellglied 102 und/oder das Ausgleichsglied 103 auch als zumindest ein elektrischer Antrieb, insbesondere Motor mit oder ohne mechanisches Getriebe, ausgeführt sein.

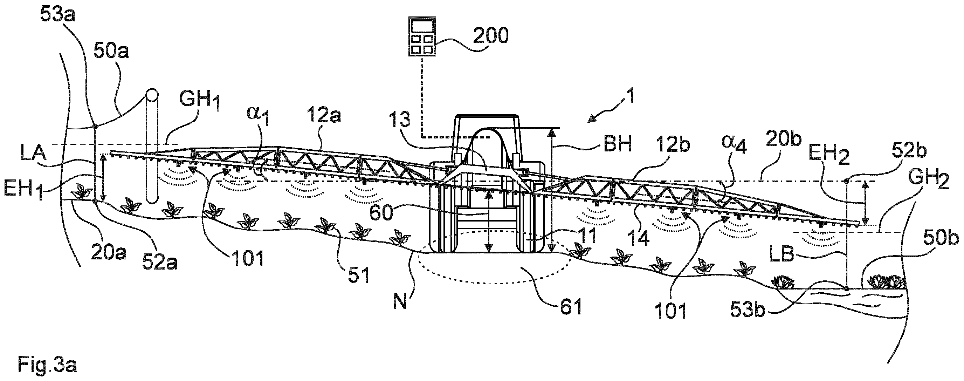

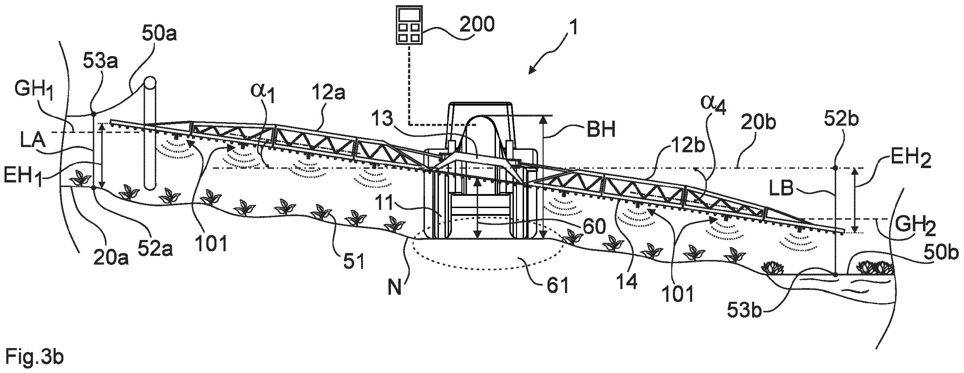

Das erfindungsgemäße Steuer- und/oder Regelsystem 200 ist dazu eingerichtet, zur Steuerung- und/oder Regelung der Einsatzhöhe EH1, EH2 eine erste und/oder zweite Grenzhöhe GH1, GH2 abzurufen und/oder vorzugeben. Alternativ hierzu kann erfindungsgemäß auch nur eine Grenzhöhe GH1, GH2 abgerufen und/oder vorgegeben werden. Das Abrufen und/oder Vorgeben kann dabei automatisiert vom Steuer- und/oder Regelsystem 200 und/oder manuell von einem Bediener mittels eines Bedien- und/oder Anzeigemittels erfolgen. Die Grenzhöhe GH1, GH2 wird hierbei, wie in der Fig.3a und Fig.3b gezeigt, entlang eines Abstands zwischen einem entlang der Referenzebene 20a, 20b, insbesondere dem Bodenprofil N, befindlichen Fußpunkt 52a, 52b und einem in vertikaler Richtung dazu beabstandeten entlang der Störkontur 50a, 50b befindlichen Schnittpunkt 53a, 53b gebildet. Insbesondere sind der Fußpunkt 52a, 52b und der dazu zugeordnete Schnittpunkt 53a, 53b über ein jeweiliges senkrechtes Lot LA, LB zueinander ausgerichtet. Ferner ist das Steuer- und/oder Regelsystem 200 und/oder das Stellglied 102 dazu eingerichtet, die Einsatzhöhe EH1, EH2 des Gestänges 12a, 12b, insbesondere der Ausleger und/oder zumindest eines Abschnitts, wenigstens in etwa auf die Grenzhöhe GH1, GH2 zu begrenzen. Als Einsatzhöhe EH1, EH2 ist in diesem Ausführungsbeispiel die, insbesondere absolute, Höhe der äußersten Punkte des Gestänges 12a, 12b, insbesondere der Ausleger, innerhalb der ausgeklappten Stellung bzw. Arbeitsstellung zu verstehen. In einer alternativen Ausführungsform kann die Einsatzhöhe EH1, EH2 auch die, insbesondere absolute, Höhe eines beliebigen Punktes entlang der Geometrie des Gestänges 12a, 12b, insbesondere der Ausleger und/oder Abschnitte, sein.

Die Fig.3a zeigt das landwirtschaftliche Gerät 1 aus Fig.1 in einer Heckansicht, bei der die Einsatzhöhe EH1, EH2 zwischen den Grenzhöhen GH1, GH2 liegt. Mit anderen Worten sind die Grenzhöhen GH1, GH2 hierbei von den Einsatzhöhen EH1, EH2 unterschritten. Die erste Grenzhöhe GH1 ist hierbei zwischen der ersten Störkontur 50a und der ersten Referenzebene 20, insbesondere dem ersten Fußpunkt 52a und Schnittpunkt 53a entlang des ersten Lots LA auf dem Bodenprofil N, angeordnet. Darüber hinaus übersteigt die erste Grenzhöhe GH1 eine von der Topologie einer Aufstandsfläche 61 des landwirtschaftlichen Geräts 1, insbesondere auf der die Aufstandselemente bzw. Räder 11 des Geräts 1 aufstehen, und/oder der Gerätehöhe abhängigen Bezugshöhe BH. Die Bezugshöhe BH kann dabei gleich zur Gerätehöhe sein und/oder einen positiven und/oder negativen Offset, insbesondere eine Maßangabe, umfassen. Somit ist die Einsatzhöhe EH1, EH2 auf eine maximale Höhe begrenzbar, bei welcher keine Kollision bzw. kein Kontakt zwischen dem Gestänge 12a, 12b, insbesondere der Ausleger und/oder Abschnitte, mit der ersten Störkontur 50a während des Betriebs verursacht werden kann. Das Steuer- und/oder Regelsystem 200 steuert- und/oder regelt die Einsatzhöhe EH1, EH2 dabei derart, dass die Einsatzhöhe EH1, EH2 während des ordnungsgemäßen Betriebs des landwirtschaftlichen Geräts 1 stets unterhalb der ersten Grenzhöhe GH1 verbleibt.

Die zweite Grenzhöhe GH2 ist zwischen einer zweiten, als künstlichen Horizont ausgeführten, Referenzebene 20b und der zweiten Störkontur 50b, insbesondere dem zweiten Fußpunkt 52b und Schnittpunkt 53b entlang des zweiten Lots LB auf dem Stillgewässer, angeordnet. Somit ist die Einsatzhöhe EH1, EH2 auf eine minimale Höhe begrenzbar, bei der keine Kollision bzw. kein Kontakt zwischen dem Gestänge 12a, 12b, insbesondere der Ausleger und/oder Abschnitte, mit der zweiten Störkontur 50a während des Betriebs verursacht werden kann. Das Steuer- und/oder Regelsystem 200 steuert- und/oder regelt die Einsatzhöhe EH1, EH2 dabei derart, dass die Einsatzhöhe EH1, EH2 während des ordnungsgemäßen Betriebs des landwirtschaftlichen Geräts 1 stets oberhalb der zweiten Grenzhöhe GH2 verbleibt.

Darüber hinaus umfasst das landwirtschaftliche Gerät 1 hierbei eine in den Figuren nicht gezeigte zweite Sensoranordnung die nach Art eines Wegmesssystems ausgebildet und dazu eingerichtet ist, einen Mittenabstand 60, der durch den Abstand zwischen der Referenzebene 20a, 20b, insbesondere Aufstandsfläche 61, und den Drehachsen Da, Db, insbesondere dem Mittelteil 13, definiert ist, zu erfassen. Mittels des Mittenabstands 60 und der von der ersten Sensoranordnung 100 erfassten Neigung, und/oder Lage des Gestänges 12a, 12b ist somit vom Steuer- und/oder Regelsystem 200 die absolute Neigung und/oder Lage des Gestänges 12a, 12b im Raum bestimmbar.

Darüber hinaus umfasst das erfindungsgemäße Steuer- und/oder Regelsystem 200 über zumindest einen ersten und zweiten Regelungsmodus. Während des ersten Regelungsmodus steuert und/oder regelt das Steuer- und/oder Regelsystem 200 die Neigung, Lage und/oder die Einsatzhöhe EH1, EH2 des Gestänges 12a, 12b, insbesondere die Ausleger und/oder Abschnitte, über die dritte Sensoranordnung 101, insbesondere mehrere als Ultraschallsensoren ausgebildeten Abstandssensoren die zum Ackerboden N gerichtet, am Gestänge 12a, 12b angeordnet sind. Während des zweiten Regelungsmodus wird die Neigung, Lage und/oder die Einsatzhöhe EH1, EH2 mittels der ersten Sensoranordnung 100, und insbesondere mittels zusätzlicher an der jeweiligen Drehachse Da, Db der Ausleger 12a, 12b und/oder Abschnitte angeordneter als Potentiometer ausgebildeter Sensoren 106a, 106b, gesteuert und/oder geregelt. Die Neigung, Lage und/oder Einsatzhöhe EH1, EH2 des Gestänges 12a, 12b wird dabei relativ zu einer Referenzebene 20a, 20b, insbesondere zu einem künstlichen Horizont, erfasst. Alternativ oder zusätzlich kann innerhalb des ersten und/oder zweiten Regelungsmodus der über die zweite Sensoranordnung erfasste Mittenabstand 60 berücksichtigt werden, um somit die auf die landwirtschaftliche Nutzfläche N, insbesondere das Bodenprofil, bezogene absolute Neigung, Lage und/oder Einsatzhöhe EH1, EH2 zu bestimmen. Der erste Regelungsmodus wird hierbei beispielhaft während einer Unterschreitung der Grenzhöhe GH1, GH2 durch die Einsatzhöhe EH1, EH2 gemäß Fig.3a verwendet.

Die Fig.3b zeigt eine Situation bei der die Einsatzhöhe EH1, EH2 die Grenzhöhe GH1, GH2, insbesondere an beiden Enden des Gestänges 12a, 12b, überschreitet. Diese kann beispielsweise durch ein fehlerhaftes Signal der dritten Sensoranordnung, insbesondere infolge eines fehlerhaft reflektierten Signals zur dritten Sensoranordnung, hervorgerufen werden. Während einer derartigen Situation wird die Grenzhöhe GH1, GH2 von der Einsatzhöhe EH1, EH2 überschritten und vom Steuer- und/oder Regelungssystem 200 vom ersten auf den zweiten Regelungsmodus gewechselt. Alternativ oder zusätzlich werden die Schaltstellungen der ersten und zweiten Ventilanordnungen 105, 107 derart geschaltet, dass eine weitere Verschwenkung des Gestänges 12a, 12b, insbesondere der Ausleger und/oder Abschnitte, über die Grenzhöhen GH1, GH2 hinaus und somit eine weitere Überschreitung mittels der Ventilanordnungen 105, 107, insbesondere der Ventile 105a, 105b, 107a, 107b, blockiert ist. Alternativ oder zusätzlich kann die Druckregelung über eine pneumatische und/oder hydraulische Druckerzeugungseinrichtung und/oder die Druckbegrenzungsventile 104a, 104b fortgesetzt werden. Während einer derartigen Situation wird die Einsatzhöhe EH1, EH2 soweit reduziert, bis die Einsatzhöhe EH1, EH2 die Grenzhöhe GH1, GH2 gemäß Fig.3a wieder unterschreitet. Das Steuer- und/oder Regelsystem 200 wechselt dann bei einer Unterschreitung der Grenzhöhe GH1, GH2 wieder in den ersten Regelungsmodus.

**Bezugszeichenliste**

| | |
|---|---|
| 1 | landwirtschaftliches Gerät, Feldspritze |
| 10 | Vorratsbehälter |
| 11 | Aufstandselemente, Räder |
| 12a, 12b | Gestänge, Gestängehälften, Ausleger, Abschnitte |
| 13 | Mittelteil |
| 14 | Stellelemente, Spritzdüsen |
| 20a | erste Referenzebene, Bodenprofil |
| 20b | zweite Referenzebene, künstlicher Horizont |
| 50a | erste Störkontur, Hochspannungsleitung |
| 50b | zweite Störkontur, Wasserspiegel |
| 51 | Pflanzenbestand |
| 52a | erster Fußpunkt |
| 52b | zweiter Fußpunkt |
| 53a | erster Schnittpunkt |
| 53b | zweiter Schnittpunkt |
| 60 | Mittenabstand |
| 61 | Aufstandsfläche |
| 100 | erste Sensoranordnung, Drehraten- bzw. Beschleunigungssensor |
| 101 | dritte Sensoranordnung, Abstandssensor |
| 102 | Stellglied |
| 103 | Ausgleichsglied |
| 104a, 104b | Druckregelventile |
| 105 | erste Ventilanordnung |
| 105a | erstes Ventil |
| 105b | zweites Ventil |
| 106a, 106b | winkelerfassende Sensoren, Potentiometer |
| 107 | zweite Ventilanordnung |
| 107a | drittes Ventil |
| 107b | viertes Ventil |
| 200 | Steuer- und/oder Regelsystem |

| | |
|---|---|
| BH | Bezugshöhe |
| Da | linke Drehachse |
| Db | rechte Drehachse |
| EH1 | linke Einsatzhöhe |
| EH2 | rechte Einsatzhöhe |
| F | Fahrtrichtung |
| GH1 | erste Grenzhöhe |
| GH2 | zweite Grenzhöhe |
| LA | erstes Lot |
| LB | zweites Lot |
| N | landwirtschaftliche Nutzfläche, Ackerboden, Bodenprofil |
| Z | Zugmaschine |
| $\alpha 1$ | Winkel zwischen linkem Ausleger und Referenzebene |
| $\alpha 2$ | Winkel zwischen linken Ausleger und Mittelteil |
| $\alpha 3$ | Winkel zwischen Mittelteil und rechten Ausleger |
| $\alpha 4$ | Winkel zwischen rechtem Ausleger und Referenzebene |

**Patentansprüche**

1. Landwirtschaftliches Gerät (1), insbesondere Verteilmaschine zum Ausbringen von Material, umfassend,

   - ein um zumindest eine Drehachse (Da, Db) schwenkbar gelagertes Gestänge (12a, 12b),
   - eine erste Sensoranordnung (100) zur Erfassung einer Neigung, Lage und/oder eines Abstands des Gestänges (12a, 12b) in Bezug auf zumindest eine Referenzebene (20a, 20b), wobei die Sensoranordnung (100) dazu eingerichtet ist, zumindest ein Sensorsignal in Abhängigkeit der erfassten Neigung, Lage und/oder des erfassten Abstands zu erzeugen,
   - ein mit der zumindest einen ersten Sensoranordnung (100) signalübertragend verbundenes Steuer- und/oder Regelsystem (200) das dazu eingerichtet ist, eine auf die zumindest eine Referenzebene (20a, 20b) bezogene aktuelle Einsatzhöhe (EH1, EH2) zumindest eines Abschnitts des Gestänges (12a, 12b) in Abhängigkeit des Sensorsignals zu ermitteln, und
   - ein vom Steuer- und/oder Regelsystem (200) steuer- und/oder regelbares und die Einsatzhöhe (EH1, EH2) beeinflussendes mit dem Gestänge (12a, 12b) gekoppeltes Stellglied (102),

   **dadurch gekennzeichnet, dass** vom Steuer- und/oder Regelsystem (200) zumindest eine Grenzhöhe (GH1, GH2) abrufbar und/oder vorgebbar ist, die durch einen Abstand zwischen wenigstens einem entlang der Referenzebene (20a, 20b), insbesondere eines Bodenprofils (N), befindlichen Fußpunkt (52a, 52b) und wenigstens einem in vertikaler Richtung dazu beabstandeten entlang einer Störkontur (50a, 50b) befindlichen Schnittpunkt (53a, 53b) gebildet ist, wobei die Einsatzhöhe (EH1, EH2) des zumindest einen Abschnitts des Gestänges (12a, 12b), insbesondere eines äußersten Punkts des Gestänges (12a, 12b) innerhalb einer aktuellen Arbeitsstellung, mittels des Steuer- und/oder Regelsystems (200) und/oder des Stellglieds (102) wenigstens in etwa auf die zumindest eine Grenzhöhe (GH1, GH2) begrenzbar ist.

2. Landwirtschaftliches Gerät (1) nach Anspruch 1, **dadurch gekennzeichnet, dass** die zumindest eine Grenzhöhe (GH1, GH2) eine von der Topologie einer Aufstandsfläche (61) und/oder der Gerätehöhe des landwirtschaftlichen Geräts (1) abhängige Bezugshöhe (BH) übersteigt.

3. Landwirtschaftliches Gerät (1) nach zumindest einem der vorgenannten Ansprüche 1 und 2, **dadurch gekennzeichnet, dass** das landwirtschaftliche Gerät (1) zumindest eine zweite Sensoranordnung umfasst die dazu eingerichtet ist, einen aktuellen Mittenabstand (60) zwischen der Drehachse (Da, Db) und der Referenzebene (20a, 20b), insbesondere eines Bodenprofils (N), zu erfassen, wobei zur Bestimmung der Einsatzhöhe (EH1, EH2) der Mittenabstand (60) vom Steuer- und/oder Regelsystem (200) berücksichtigbar ist.

4. Landwirtschaftliches Gerät (1) nach zumindest einem der vorgenannten Ansprüche 1 bis 3, bei dem das Stellglied (102) als ein hydraulisch und/oder pneumatisch und über zwei, vorzugsweise proportional steuer- und/oder regelbare, Druckregelventile (104a, 104b) betreibbarer Stellzylinder ausgebildet ist, wobei jedem Druckregelventil wenigstens eine, insbesondere zwischen dem Stellzylinder und dem Druckregelventil angeordnete und mit dem Steuer- und/oder Regelsystem (200) signalübertragend verbundene erste Ventilanordnung (105) mit zumindest einem Ventil (105a, 105b) zugeordnet ist, **dadurch gekennzeichnet, dass** die erste Ventilanordnung (105) in Abhängigkeit der zumindest einen Grenzhöhe (GH1, GH2) und der Einsatzhöhe (EH1, EH2) des zumindest einen Abschnitts des Gestänges (12a, 12b) ansteuerbar und/oder regelbar ist.

5. Landwirtschaftliches Gerät (1) nach zumindest einem der vorgenannten Ansprüche 1 bis 4, wobei das Gestänge (12a, 12b) wenigstens einen mit dem landwirtschaftlichen Gerät (1) gekoppelten Mittelteil (13) und wenigstens zwei, vorzugsweise gelenkig klappbare, an dem Mittelteil (13) schwenkbar gelagerte Ausleger aufweist, wobei das zumindest eine Stellglied (102) zwischen dem wenigstens einen Mittelteil (13) und zumindest einem der Ausleger angeordnet ist, und wobei die erste Sensoranordnung (100) an zumindest einem der Ausleger angeordnet ist, **dadurch gekennzeichnet, dass** zwischen den Auslegern oder dem Mittelteil (13) und jeweils jedem Ausleger zumindest ein Sensor zur Erfassung eines Winkels, angeordnet ist, wobei das Steuer- und/oder Regelsystem (200) dazu eingerichtet ist, die Neigung und/oder Lage, insbesondere Einsatzhöhe (EH1, EH2), der Ausleger in Abhängigkeit des Sensorsignals der ersten Sensoranordnung (100) und den vom Sensor erfassbaren Winkel zu bestimmen.

6. Landwirtschaftliches Gerät (1) nach Anspruch 4 und 5, bei dem die zumindest zwei Ausleger über zumindest ein, vorzugsweise hydraulisch und/oder pneumatisch betreibbares, Ausgleichsglied (103) miteinander gekoppelt und die Neigung und/oder Lage, insbesondere der Winkel, zwischen den beiden Auslegern mittels des zumindest einen Ausgleichsglieds (103) beeinflussbar sind, **dadurch gekennzeichnet, dass** dem Ausgleichsglied (103) zumindest eine zweite Ventilanordnung (107) mit zumindest einem, vorzugsweise proportional steuer- und/oder regelbaren, Ventil (107a, 107b) zugeordnet ist, wobei die Schaltzustände der ersten und zweiten Ventilanordnung (105, 107), insbesondere der Ventile (105a, 105b, 107a, 107b), in Abhängigkeit der zumindest einen Grenzhöhe (GH1, GH2) und der Einsatzhöhe (EH1, EH2) anpassbar sind.

7. Landwirtschaftliches Gerät (1) nach zumindest einem der vorgenannten Ansprüche 1 bis 6, **dadurch gekennzeichnet, dass** das landwirtschaftliche Gerät (1) als eine, insbesondere gezogene oder selbstfahrende, Feldspritze ausgebildet ist.

8. Verfahren zum Betreiben eines landwirtschaftlichen Geräts das nach zumindest einem der vorgenannten Ansprüche 1 bis 7 ausgebildet ist, mit den Schritten:

- Erfassen der Neigung, Lage und/oder des Abstands des Gestänges (12a, 12b) mittels der ersten Sensoranordnung (100) in Bezug auf die Referenzebene (20a, 20b);
- Erzeugen eines Sensorsignals in Abhängigkeit der erfassten Neigung und/oder Lage mittels der ersten Sensoranordnung (100);
- Ermitteln der auf die Referenzebene (20a, 20b) bezogenen aktuellen Einsatzhöhe (EH1, EH2) des zumindest einen Abschnitts des Gestänges (12a, 12b) in Abhängigkeit des Sensorsignals mittels des Steuer- und/oder Regelsystems (200);
- Steuern und/oder Regeln der Einsatzhöhe (EH1, EH2) mittels des zumindest einen Stellglieds (102);

**gekennzeichnet durch** die Schritte:

- Vorgeben und/oder Abrufen der zumindest einen Grenzhöhe (GH1, GH2) die durch den Abstand zwischen dem wenigstens einen entlang der Referenzebene (20a, 20b), insbesondere eines Bodenprofils (N), befindlichen Fußpunkt (52a, 52b) und wenigstens dem einen in vertikaler Richtung dazu beabstandeten entlang der Störkontur (50a, 50b) befindlichen Schnittpunkt (53a, 53b) gebildet ist; und
- Begrenzen der Einsatzhöhe (EH1, EH2) des zumindest einen Abschnitts des Gestänges (12a, 12b), insbesondere eines äußersten Punkts des Gestänges (12a, 12b) innerhalb einer aktuellen Arbeitsstellung, wenigstens in etwa auf die zumindest eine Grenzhöhe (GH1, GH2) mittels des Steuer- und/oder Regelsystems (200) und/oder dem zumindest einen Stellglieds (102).

9. Verfahren nach Ansprüche 8, **dadurch gekennzeichnet, dass** während die zumindest eine Grenzhöhe (GH1, GH2) von der Einsatzhöhe (EH1, EH2) erreicht oder überschritten wird eine weitere Erhöhung der Überschreitung mittels des Steuerund/oder Regelsystems (200) und/oder des Stellglieds (102) zumindest nahezu verhindert, insbesondere blockiert, wird.

10. Verfahren nach zumindest einem der vorgenannten Ansprüche 8 bis 9, **dadurch gekennzeichnet, dass** während die zumindest eine Grenzhöhe (GH1, GH2) von der Einsatzhöhe (EH1, EH2) unterschritten wird die Einsatzhöhe (EH1, EH2) mittels des Steuerund/oder Regelsystems (200) und/oder des Stellglieds (102) gesteuert und/oder geregelt wird.

11. Verfahren nach zumindest einem der vorgenannten Ansprüche 8 bis 10, **dadurch gekennzeichnet, dass** das Steuer- und/oder Regelsystem (200) zumindest einen ersten und zweiten Regelungsmodus zum Steuern und/oder Regeln der Einsatzhöhe (EH1, EH2) umfasst, wobei der erste Regelungsmodus während einer Unterschreitung der zumindest einen Grenzhöhe (GH1, GH2) und der zweite Regelungsmodus während einer Überschreitung der zumindest einen Grenzhöhe (GH1, GH2) aktiviert ist.

12. Verfahren nach zumindest einem der vorgenannten Ansprüche 8 bis 11, **gekennzeichnet durch** die Schritte:

- Erfassen eines aktuellen Mittenabstands (60) zwischen der Drehachse (Da, Db) und der Referenzebene (20a, 20b), insbesondere eines Bodenprofils (N), mittels zumindest einer zweiten Sensoranordnung; und/oder
- Vorgeben und/oder Abrufen des aktuellen Mittenabstands (60) mittels des Steuer- und/oder Regelsystems (200); und
- Ermitteln der Einsatzhöhe (EH1, EH2) mittels des Steuer- und/oder Regelsystems (200) unter Berücksichtigung des Mittenabstands (60).

13. Verfahren nach zumindest einem der vorgenannten Ansprüche 8 und 12, wobei das Gestänge (12a, 12b) wenigstens einen mit dem landwirtschaftlichen Gerät (1) gekoppelten Mittelteil (13) und wenigstens zwei, vorzugsweise gelenkig klappbare, an dem Mittelteil (13) schwenkbar gelagerte Ausleger aufweist, wobei das zumindest eine Stellglied (102) zwischen dem wenigstens einen Mittelteil (13) und zumindest einem der Ausleger angeordnet ist, und wobei die erste Sensoranordnung (100) an zumindest einem der Ausleger angeordnet ist,
**gekennzeichnet durch** die Schritte:

- Erfassen der Neigung und/oder Lage, insbesondere Einsatzhöhe (EH1, EH2), des zumindest einen Auslegers mittels der ersten Sensoranordnung (100); und
- Erfassen eines ersten und/oder zweiten Winkels zwischen den Auslegern oder dem Mittelteil (13) und den Auslegern mittels zumindest eines Sensors; und/oder
- Ermitteln der Neigung und/oder Lage des Mittelteils (13) und/oder der Ausleger in Abhängigkeit der erfassten Winkel.

14. Verfahren nach zumindest einem der vorgenannten Ansprüche 8 und 13, wobei das Stellglied (102) als ein hydraulisch und/oder pneumatisch und über zwei, vorzugsweise proportional steuer- und/oder regelbare, Druckregelventile (104a, 104b) betreibbarer Stellzylinder ausgebildet ist, und wobei jedem Druckregelventil (104a, 104b) wenigstens eine, insbesondere zwischen dem Stellzylinder und dem Druckregelventil (104a, 104b) angeordnete und mit dem Steuer- und/oder Regelsystem (200) signalübertragend verbundene erste Ventilanordnung (105) mit zumindest einem Ventil (105a, 105b) zugeordnet ist, **gekennzeichnet durch** den Schritt:

- Ändern des Schaltzustandes der ersten Ventilanordnung (105) mit dem zumindest einen Ventil (105a, 105b) in Abhängigkeit der zumindest einen Grenzhöhe (GH1, GH2) und der aktuellen Einsatzhöhe (EH1, EH2).

15. Verfahren nach den Ansprüchen 13 und 14, wobei die zumindest zwei Ausleger über zumindest ein, vorzugsweise hydraulisch und/oder pneumatisch betreibbares, Ausgleichsglied (103) miteinander gekoppelt und die Neigung und/oder Lage, insbesondere der Winkel, zwischen den beiden Auslegern mittels des zumindest einen Ausgleichsglieds (103) beeinflussbar sind, **dadurch gekennzeichnet,**

**dass** dem Ausgleichsglied (103) zumindest eine zweite Ventilanordnung (107) mit zumindest einem, vorzugsweise proportional steuer- und/oder regelbaren, Ventil (107a, 107b) zugeordnet ist, wobei die Schaltzustände der ersten und zweiten Ventilanordnung (105, 107), insbesondere der Ventile (105a, 105b, 107a, 107b), in Abhängigkeit der zumindest einen Grenzhöhe (GH1, GH2) und der Einsatzhöhe (EH1, EH2) angepasst werden.

**Claims**

1. Agricultural device (1), in particular a distribution machine for applying material, comprising

- a boom (12a, 12b) which is pivotably mounted about at least one axis of rotation (Da, Db),
- a first sensor arrangement (100) for detecting an inclination, a position and/or a distance of the boom (12a, 12b) with respect to at least one reference plane (20a, 20b), the sensor arrangement (100) being configured to generate at least one sensor signal on the basis of the detected inclination, position and/or the detected distance,
- an open-loop and/or closed-loop control system (200), which is connected to the at least one first sensor arrangement (100) in a signal-transmitting manner and which is configured to determine a current operating height (EH1, EH2) of at least one portion of the boom (12a, 12b), which height relates to the at least one reference plane (20a, 20b), on the basis of the sensor signal, and
- an actuator (102) which can be controlled in an open-loop and/or closed-loop manner by the open-loop and/or closed-loop control system (200), which influences the operating height (EH1, EH2) and is coupled to the boom (12a, 12b),

**characterized in that** at least one limit height (GH1, GH2) can be retrieved and/or specified by the open-loop and/or closed-loop control system (200), which height is formed by a distance between at least one base (52a, 52b) located along the reference plane (20a, 20b), in particular a ground profile (N), and at least one intersection (53a, 53b) which is spaced apart therefrom in the vertical direction along an interference contour (50a, 50b), it being possible for the operating height (EH1, EH2) of the at least one portion of the boom (12a, 12b), in particular of an outermost point of the boom (12a, 12b) within a current working position, to be limited at least approximately to the at least one limit height (GH1, GH2) by means of the open-loop and/or closed-loop control system (200) and/or the actuator (102).

**2.** Agricultural device (1) according to claim 1, **characterized in that** the at least one limit height (GH1, GH2) exceeds a reference height (BH) which is dependent on the topology of a contact surface (61) and/or the device height of the agricultural device (1).

**3.** Agricultural device (1) according to at least one of the preceding claims 1 and 2, **characterized in that** the agricultural device (1) comprises at least one second sensor arrangement which is configured to detect a current center distance (60) between the axis of rotation (Da, Db) and the reference plane (20a, 20b), in particular a ground profile (N), it being possible for the center distance (60) to be taken into account by the open-loop and/or closed loop control system (200) in order to determine the operating height (EH1, EH2).

**4.** Agricultural device (1) according to at least one of the preceding claims 1 to 3, wherein the actuator (102) is designed as an actuating cylinder which can be operated hydraulically and/or pneumatically and can be operated via two pressure-regulating valves (104a, 104b) that can be preferably proportionally controlled in an open-loop and/or closed-loop manner, a first valve arrangement (105) having at least one valve (105a, 105b), which arrangement is arranged in particular between the actuating cylinder and the pressure-regulating valve and connected to the open-loop and/or closed-loop control system (200) in a signal-transmitting manner, being associated with each pressure-regulating valve, **characterized in that** the first valve arrangement (105) can be controlled in an open-loop and/or closed-loop manner on the basis of the at least one limit height (GH1, GH2) and the operating height (EH1, EH2) of the at least one portion of the boom (12a, 12b).

**5.** Agricultural device (1) according to at least one of the preceding claims 1 to 4, the boom (12a, 12b) having at least one central part (13) which is coupled to the agricultural device (1) and at least two, preferably hingedly foldable, arms which are pivotably mounted on the central part (13), the at least one actuator (102) being arranged between the at least one central part (13) and at least one of the arms, and the first sensor arrangement (100) being arranged on at least one of the arms, **characterized in that** at least one sensor for detecting an angle is arranged between the arms or the central part (13) and each arm, the open-loop and/or closed-loop control system (200) being configured to determine the inclination and/or the position, in particular the operating height (EH1, EH2), of the arm on the basis of the sensor signal of the first sensor arrangement (100) and the angle which can be detected by the sensor.

**6.** Agricultural device (1) according to claims 4 and 5, wherein the at least two arms are coupled to one another via at least one, preferably hydraulically and/or pneumatically operable, compensating member (103), and the inclination and/or the position, in particular the angle, between the two arms can be influenced by means of the at least one compensating member (103), **characterized in that** at least one second valve arrangement (107) having at least one valve (107a, 107b) that can be preferably proportionally controlled in an open-loop and/or closed-loop manner, is associated with the compensating member (103), it being possible for the switching states of the first and the second valve arrangement (105, 107), in particular of the valves (105a, 105b, 107a, 107b), to be adapted on the basis of the at least one limit height (GH1, GH2) and the operating height (EH1, EH2).

**7.** Agricultural device (1) according to at least one of the preceding claims 1 to 6, **characterized in that** the agricultural device (1) is designed as an in particular towed or self-propelled field sprayer.

**8.** Method for operating an agricultural device, which is designed according to at least one of the preceding claims 1 to 7, comprising the steps of:

- detecting the inclination, position and/or distance of the boom (12a, 12b) by means of the first sensor arrangement (100) with respect to the reference plane (20a, 20b);
- generating a sensor signal on the basis of the detected inclination and/or position by means of the first sensor arrangement (100);
- determining the current operating height (EH1, EH2) of the at least one portion of the boom (12a, 12b), which height relates to the reference plane (20a, 20b), on the basis of the sensor signal by means of the open-loop and/or closed-loop control system (200);
- controlling the operating height (EH1, EH2) by means of the at least one actuator (102) in an open-loop and/or closed-loop manner;

**characterized by** the following steps:

- specifying and/or retrieving the at least one limit height (GH1, GH2) which is formed by the distance between the at least one base (52a, 52b) located along the reference plane (20a, 20b), in particular a ground profile (N), and at least one intersection (53a, 53b) which is spaced apart therefrom in the vertical direction along the interference contour (50a, 50b); and
- limiting the operating height (EH1, EH2) of the at least one portion of the boom (12a, 12b), in particular of an outermost point of the boom (12a, 12b) within a current working position, at least approximately to the at least one limit height (GH1, GH2) by means of the open-loop and/or closed-loop control system (200) and/or the at least one actuator (102).

9. Method according to claim 8, **characterized in that** while the at least one limit height (GH1, GH2) is reached or exceeded by the operating height (EH1, EH2), a further increase in the exceedance by means of the open-loop and/or closed-loop control system (200) and/or the actuator (102) is at least virtually prevented, in particular blocked.

10. Method according to at least one of the preceding claims 8 to 9, **characterized in that** while the at least one limit height (GH1, GH2) does not reach the operating height (EH1, EH2), the operating height (EH1, EH2) is controlled in an open-loop and/or closed-loop manner by means of the open-loop and/or closed-loop control system (200) and/or the actuator (102).

11. Method according to at least one of the preceding claims 8 to 10, **characterized in that** the open-loop and/or closed-loop control system (200) comprises at least one first and second closed-loop control mode for controlling the operating height (EH1, EH2) in an open-loop and/or closed-loop manner, the first closed-loop control mode being activated when the at least one limit height (GH1, GH2) is not reached and the second closed-loop control mode being activated when the at least one limit height (GH1, GH2) is exceeded.

12. Method according to at least one of the preceding claims 8 to 11, **characterized by** the steps of:

    - detecting a current center distance (60) between the axis of rotation (Da, Db) and the reference plane (20a, 20b), in particular a ground profile (N), by means of at least one second sensor arrangement; and/or
    - specifying and/or retrieving the current center distance (60) by means of the open-loop and/or closed-loop control system (200); and
    - determining the operating height (EH1, EH) by means of the open-loop and/or closed-loop control system (200) taking into account the center distance (60).

13. Method according to at least one of the preceding claims 8 and 12, the boom (12a, 12b) having at least one central part (13) which is coupled to the agricultural device (1) and at least two, preferably hingedly foldable arms which are pivotably mounted on the central part (13), the at least one actuator (102) being arranged between the at least one central part (13) and at least one of the arms, and the first sensor arrangement (100) being arranged on at least one of the arms, **characterized by** the steps of:

    - detecting the inclination and/or position, in particular the operating height (EH1, EH2), of the at least one arm by means of the first sensor arrangement (100); and
    - detecting a first and/or a second angle between the arms or the central part (13) and the arms by means of at least one sensor; and/or
    - determining the inclination and/or position of the central part (13) and/or the arm on the basis of the detected angles.

14. Method according to at least one of the preceding claims 8 and 13, the actuator (102) being designed as an actuating cylinder which can be operated hydraulically and/or pneumatically and can be operated via two pressure-regulating valves (104a, 104b) that can be preferably proportionately controlled in an open-loop and/or closed-loop manner, and at least one first valve arrangement (105) having at least one valve (105a, 105b), which arrangement is arranged in particular between the actuating cylinder and the pressure-regulating valve (104a, 104b) and connected to the open-loop and/or closed-loop control system (200) in a signal-transmitting manner, is associated with each pressure-regulating valve (104a, 104b), **characterized by** the step of:

    - changing the switching state of the first valve arrangement (105) having the at least one valve (105a, 105b) on the basis of the at least one limit height (GH1, GH2) and the current operating height (EH1, EH2).

15. Method according to claims 13 and 14, the at least two arms being coupled to one another via at least one, preferably hydraulically and/or pneumatically operable, compensating member (103) and it being possible for the inclination and/or the position, in particular the angle, between the two arms to be influenced by means of the at least one compensating member (103), **characterized in that** at least one second valve arrangement (107) having at least one valve (107a, 107b), which can be controlled in a preferably proportionally open-loop and/or closed-loop manner, is associated with the compensating member (103), the switching states of the first and the second valve arrangement (105, 107), in particular of the valves (105a, 105b, 107a, 107b) being adapted on the basis of the at least one limit height (GH1, GH2) and the operating height (EH1, EH2).

**Revendications**

1.  Appareil agricole (1), en particulier épandeur destiné à épandre un matériau, comprenant

    - une rampe (12a, 12b) montée de manière à pouvoir pivoter autour d'au moins un axe de rotation (Da, Db),
    - un premier agencement de capteur (100) destiné à détecter une inclinaison, une position et/ou une distance de la rampe (12a, 12b) par rapport à au moins un plan de référence (20a, 20b), l'agencement de capteur (100) étant configuré pour générer au moins un signal de capteur en fonction de l'inclinaison, de la position et/ou de la distance détectées,
    - un système de commande et/ou de régulation (200) relié par transmission de signaux à l'au moins un premier agencement de capteur (100), lequel système est configuré pour déterminer une hauteur d'utilisation (EH1, EH2) réelle, se rapportant à l'au moins un plan de référence (20a, 20b), d'au moins une section de la rampe (12a, 12b) en fonction du signal de capteur, et
    - un organe de réglage (102) accouplé à la rampe (12a, 12b), pouvant être commandé et/ou régulé par le système de commande et/ou de régulation (200) et influençant la hauteur d'utilisation (EH1, EH2),

    **caractérisé en ce qu'**au moins une hauteur limite (GH1, GH2) peut être consultée et/ou spécifiée par le système de commande et/ou de régulation (200), laquelle hauteur limite est formée par une distance entre au moins un niveau (52a, 52b) se trouvant le long du plan de référence (20a, 20b), en particulier d'un profil de sol (N), et au moins une intersection (53a, 53b) se trouvant à une certaine distance de celui-ci dans la direction verticale le long d'un contour d'encombrement (50a, 50b), la hauteur d'utilisation (EH1, EH2) de l'au moins une section de la rampe (12a, 12b), en particulier d'un point le plus externe de la rampe (12a, 12b), dans une position de travail réelle, pouvant être limitée au moins approximativement à l'au moins une hauteur limite (GH1, GH2) au moyen du système de commande et/ou de régulation (200) et/ou de l'organe de réglage (102).

2.  Appareil agricole (1) selon la revendication 1, **caractérisé en ce que** l'au moins une hauteur limite (GH1, GH2) est supérieure à une hauteur de référence (BH) dépendant de la topologie d'une surface de contact (61) et/ou de la hauteur d'appareil de l'appareil agricole (1).

3.  Appareil agricole (1) selon au moins l'une des revendications susmentionnées 1 et 2, **caractérisé en ce que** l'appareil agricole (1) comprend au moins un second agencement de capteur qui est configuré pour détecter un écartement moyen (60) réel entre l'axe de rotation (Da, Db) et le plan de référence (20a, 20b), en particulier d'un profil de sol (N), l'écartement moyen (60) pouvant être pris en compte par le système de commande et/ou de régulation (200) pour la détermination de la hauteur d'utilisation (EH1, EH2).

4.  Appareil agricole (1) selon au moins l'une des revendications susmentionnées 1 à 3, dans lequel l'organe de réglage (102) est conçu comme un vérin de réglage pouvant fonctionner hydrauliquement et/ou pneumatiquement et par l'intermédiaire de deux soupapes de régulation de pression (104a, 104b), de préférence pouvant être commandées et/ou régulées de manière proportionnelle, au moins un premier agencement de soupape (105) comportant au moins une soupape (105a, 105b), en particulier disposé entre le vérin de réglage et la soupape de régulation de pression et relié par transmission de signaux au système de commande et/ou de régulation (200), étant associé à chaque soupape de régulation de pression, **caractérisé en ce que** le premier agencement de soupape (105) peut être commandé et/ou régulé en fonction de l'au moins une hauteur limite (GH1, GH2) et de la hauteur d'utilisation (EH1, EH2) de l'au moins une section de la rampe (12a, 12b).

5.  Appareil agricole (1) selon au moins l'une des revendications susmentionnées 1 à 4, la rampe (12a, 12b) présentant au moins une partie centrale (13) accouplée à l'appareil agricole (1) et au moins deux flèches de préférence repliables de manière articulée et montées de manière à pouvoir pivoter sur la partie centrale (13), l'au moins un organe de réglage (102) étant disposé entre l'au moins une partie centrale (13) et au moins l'une des flèches et le premier agencement de capteur (100) étant disposé sur au moins l'une des flèches, **caractérisé en ce qu'**au moins un capteur destiné à détecter un angle est disposé entre les flèches ou la partie centrale (13) et respectivement chaque flèche, le système de commande et/ou de régulation (200) étant configuré pour déterminer l'inclinaison et/ou la position, en particulier la hauteur d'utilisation (EH1, EH2), des flèches en fonction du signal de capteur du premier agencement de capteur (100) et l'angle pouvant être détecté par le capteur.

6.  Appareil agricole (1) selon les revendications 4 et 5, dans lequel les au moins deux flèches sont accouplées l'une à l'autre par l'intermédiaire d'au moins un organe de compensation (103), pouvant fonctionner de préférence hydrauliquement et/ou pneumatiquement, et l'inclinaison et/ou la position, en particulier l'angle, entre les deux flèches peuvent être influencées au moyen de l'au moins un organe de compensation (103), **caractérisé en ce qu'**au moins un second agencement de soupape (107) comportant au moins une soupape (107a, 107b), de préférence pouvant être commandée et/ou régulée de manière proportionnelle, est associé à l'organe de compensation (103), les états de commutation du premier et du second agencement de soupape (105, 107), en particulier des soupapes (105a, 105b, 107a, 107b), étant adaptables en fonction de l'au moins une hauteur limite (GH1, GH2) et de la hauteur d'utilisation (EH1, EH2).

7. Appareil agricole (1) selon au moins l'une des revendications susmentionnées 1 à 6, **caractérisé en ce que** l'appareil agricole (1) est conçu comme un pulvérisateur agricole, en particulier tracté ou automoteur.

8. Procédé permettant de faire fonctionner un appareil agricole conçu selon au moins l'une des revendications susmentionnées 1 à 7, comportant les étapes de :

   - détection de l'inclinaison, de la position et/ou de la distance de la rampe (12a, 12b) par rapport au plan de référence (20a, 20b) au moyen du premier agencement de capteur (100) ;
   - génération d'un signal de capteur en fonction de l'inclinaison et/ou de la position détectées au moyen du premier agencement de capteur (100) ;
   - détermination de la hauteur d'utilisation (EH1, EH2) réelle, se rapportant au plan de référence (20a, 20b), de l'au moins une section de la rampe (12a, 12b) en fonction du signal de capteur au moyen du système de commande et/ou de régulation (200) ;
   - commande et/ou régulation de la hauteur d'utilisation (EH1, EH2) au moyen de l'au moins un organe de réglage (102) ;

   **caractérisé par** les étapes de :

   - spécification et/ou consultation de l'au moins une hauteur limite (GH1, GH2) qui est formée par la distance entre l'au moins un niveau (52a, 52b) se trouvant le long du plan de référence (20a, 20b), en particulier d'un profil de sol (N), et au moins l'intersection (53a, 53b) se trouvant à une certaine distance de celui-ci dans la direction verticale le long du contour d'encombrement (50a, 50b) ; et
   - limitation de la hauteur d'utilisation (EH1, EH2) de l'au moins une section de la rampe (12a, 12b), en particulier d'un point le plus externe de la rampe (12a, 12b), dans une position de travail réelle, au moins approximativement à l'au moins une hauteur limite (GH1, GH2) au moyen du système de commande et/ou de régulation (200) et/ou de l'au moins un organe de réglage (102).

9. Procédé selon la revendication 8, **caractérisé en ce que,** pendant que la hauteur d'utilisation (EH1, EH2) atteint ou dépasse l'au moins une hauteur limite (GH1, GH2), une augmentation supplémentaire du dépassement est au moins pratiquement empêchée, en particulier bloquée, au moyen du système de commande et/ou de régulation (200) et/ou de l'organe de réglage (102).

10. Procédé selon au moins l'une des revendications susmentionnées 8 à 9, **caractérisé en ce que**, pendant que la hauteur d'utilisation (EH1, EH2) passe en dessous de l'au moins une hauteur limite (GH1, GH2), la hauteur d'utilisation (EH1, EH2) est commandée et/ou régulée au moyen du système de commande et/ou de régulation (200) et/ou de l'organe de réglage (102).

11. Procédé selon au moins l'une des revendications susmentionnées 8 à 10, **caractérisé en ce que** le système de commande et/ou de régulation (200) comprend au moins un premier et un second mode de régulation pour la commande et/ou la régulation de la hauteur d'utilisation (EH1, EH2), le premier mode de régulation étant activé pendant un passage en dessous de l'au moins une hauteur limite (GH1, GH2) et le second mode de régulation étant activé pendant un dépassement de l'au moins une hauteur limite (GH1, GH2).

12. Procédé selon au moins l'une des revendications susmentionnées 8 à 11, **caractérisé par** les étapes de :

    - détection d'un écartement moyen (60) réel entre l'axe de rotation (Da, Db) et le plan de référence (20a, 20b), en particulier d'un profil de sol (N), au moyen d'au moins un second agencement de capteur ; et/ou
    - spécification et/ou consultation de l'écartement moyen (60) réel au moyen du système de commande et/ou de régulation (200) ; et
    - détermination de la hauteur d'utilisation (EH1, EH2) au moyen du système de commande et/ou de régulation (200) en tenant compte de l'écartement moyen (60).

13. Procédé selon au moins l'une des revendications susmentionnées 8 et 12, la rampe (12a, 12b) présentant au moins une partie centrale (13) accouplée à l'appareil agricole (1) et au moins deux flèches, de préférence repliables de manière articulée, montées de manière à pouvoir pivoter sur la partie centrale (13), l'au moins un organe de réglage (102) étant disposé entre l'au moins une partie centrale (13) et au moins l'une des flèches et le premier agencement de capteur (100) étant disposé sur au moins l'une des flèches, **caractérisé par** les étapes de :

- détection de l'inclinaison et/ou de la position, en particulier de la hauteur d'utilisation (EH1, EH2), de l'au moins une flèche au moyen du premier agencement de capteur (100) ; et
- détection d'un premier et/ou d'un second angle entre les flèches ou la partie centrale (13) et les flèches au moyen d'au moins un capteur ; et/ou
- détermination de l'inclinaison et/ou de la position de la partie centrale (13) et/ou des flèches en fonction de l'angle détecté.

**14.** Procédé selon au moins l'une des revendications susmentionnées 8 et 13, l'organe de réglage (102) étant conçu comme un vérin de réglage pouvant fonctionner hydrauliquement et/ou pneumatiquement et par l'intermédiaire de deux soupapes de régulation de pression (104a, 104b), de préférence pouvant être commandées et/ou régulées de manière proportionnelle, et au moins un premier agencement de soupape (105) comportant au moins une soupape (105a, 105b), en particulier disposé entre le vérin de réglage et la soupape de régulation de pression (104a, 104b) et relié par transmission de signaux au système de commande et/ou de régulation (200), étant associé à chaque soupape de régulation de pression (104a, 104b), **caractérisé par** l'étape de :

- modification de l'état de commutation du premier agencement de soupape (105) comportant l'au moins une soupape (105a, 105b) en fonction de l'au moins une hauteur limite (GH1, GH2) et de la hauteur d'utilisation (EH1, EH2) réelle.

**15.** Procédé selon les revendications 13 et 14, les au moins deux flèches étant accouplées l'une à l'autre par l'intermédiaire d'au moins un organe de compensation (103) pouvant fonctionner de préférence hydrauliquement et/ou pneumatiquement et l'inclinaison et/ou la position, en particulier l'angle, entre les deux flèches pouvant être influencées au moyen de l'au moins un organe de compensation (103), **caractérisé en ce qu'**au moins un second agencement de soupape (107) comportant au moins une soupape (107a, 107b), de préférence pouvant être commandée et/ou régulée de manière proportionnelle, est associé à l'organe de compensation (103), les états de commutation du premier et du second agencement de soupape (105, 107), en particulier des soupapes (105a, 105b, 107a, 107b), étant adaptés en fonction de l'au moins une hauteur limite (GH1, GH2) et de la hauteur d'utilisation (EH1, EH2).

Fig. 1

Fig.2a

Fig.2b

Fig.2c

EP 3 987 928 B1

Fig.3a

Fig.3b

EP 3 987 928 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015040133 A1
- WO 2017202581 A1